# EUROPEAN PATENT APPLICATION

(11) **EP 1 791 245 A1**
(43) Date of publication of application: **30.05.2007**
(21) Application number: 05111284.5
(22) Date of filing: 25.11.2005
(51) Int. Cl.: H02M 3/07

(54) **Charge pump circuit**

(71) Applicant: STMicroelectronics S.r.l., 20041 Agrate Brianza (Milano) (IT)
(72) Inventor: Campardo, Giovanni, I-24128 Bergamo (BG) (IT); Micheloni, Rino, I-22078 Turate (CO) (IT)
(74) Representative: Maccalli, Marco

(57) **Abstract**

A charge pump circuit comprises at least one pump stage. Said pump stage includes a capacitor (C1,C2,C3;C'1,C'2,C'3) having a first plate and a second plate. The pump stage further includes a first circuital node (N1,N3,N5;N'2,N'4,N'6) connected to the first plate, a voltage of the first circuital node is forced to a first forced voltage (GND) during a forcing phase of the charge pump operation, and a second circuital node (N2,N4,N6;N'1,N'3,N'5) connected to the second plate, a voltage of the second circuital node is forced to a second forced voltage (Vdd) during the forcing phase. The voltages of the first and the second circuital nodes are free of changing with respect to the first and to the second forced voltage, respectively, except during said forcing phase. The pump stage still further includes a first forcing circuit (110,130,150;420,440,460) associated to the first circuital node, the first forcing circuit being activable for forcing the voltage of the first circuital node to the first forced voltage during the forcing phase, and a second forcing circuit (120,140,160;410,430,450) associated to the second circuital node, the second forcing circuit being activable for forcing the voltage of the second circuital node to the second forced voltage during the forcing phase.

## Description

The present invention relates to the field of the semiconductor Integrated Circuits (ICs), and more particularly, it relates to ICs that have to manage differentiated voltage levels.

ICs can be classified in two broad categories, depending on the entity of the voltage differences that occur across the terminals of the electronic devices included therein.

More specifically, in ICs belonging to a first category, called from now on "low voltage ICs", all the electronic devices included therein (e.g., the transistors and the capacitors) are designed in such a way to guarantee the capability of sustaining, between their terminals, voltage differences that are up-limited (in absolute value) by a predetermined maximum voltage difference ΔVml, e.g. equal to the IC supply voltage value Vdd. The voltage differences experienced by the devices included in the low voltage ICs are such as to allow the correct functioning of standard devices (like those making up the logic circuitry included in ICs) without causing malfunctioning or breaking thereof, that may be caused instead by excessive voltage difference values. Referring for example to ICs including transistors like BJTs or FETs, particularly IGFETs, the predetermined maximum voltage difference ΔVml may be equal to the supply voltage Vdd, in such a way to avoid the occurrence of gate insulators (oxides) breaking, or unwanted junctions breakdown. In particular, as far as Metal Oxide Semiconductor (MOS) transistors, Low Voltage (LV) MOS transistor (hereinafter, LV transistors) are devices adapted to guarantee the capability of sustaining between their terminals voltage differences that are up-limited by the IC supply voltages Vdd.

The low voltage IC is designed in such a way that, in operation, practically all the transistors included therein experience voltage differences equal to the supply voltage Vdd or less, at least between their control terminal, e.g., the gate terminal, and any other terminal thereof (avoiding thus occurrence of gate insulators breaking), and preferably between pair of terminals corresponding to semiconductor junctions (avoiding thus occurrence of junctions breakdown).

The ICs belonging to the second category, called from now on "high voltage ICs", include instead, in addition to low-voltage devices, devices designed in such a way to guarantee the capability of sustaining, at least between a pair of their terminals, voltage differences up-limited by a predetermined maximum voltage difference ΔVmh higher than the predetermined maximum voltage difference ΔVml that the devices included in low voltage ICs are guaranteed to sustain. Referring again to the example of circuits including transistors, the high voltage circuits include one or more transistors biased in such a way to experience voltage differences at least between their gate terminal and any other terminal thereof that are higher than the IC supply voltage Vdd.

ICs of such category are for example common in the field of memory circuits. In particular, in non-volatile memories high voltages are needed to modify the stored data (e.g., to program and/or erase the memory cells of the memory, in such a way to activate known physical phenomena such as Channel Hot Electron - CHE - and Fowler-Nordheim Tunneling - FNT). The transistors used in such high voltage ICs need to be capable of withstanding high voltage differences across their terminals, without damaging or malfunctioning, for example not to trigger CHE or FNT. In fact, while for a memory cell the CHE and FNT effects are desired and controlled for the purposes of modifying the stored data, said effects are in turn deleterious for the transistors of the rest of the IC, like the logic circuitry.

As another example, in volatile memories, such as in SRAMS and DRAMS, high voltages higher than the IC supply voltage Vdd can be used for biasing the cells of the memory, in such a way to improve the speed of the reading operations.

In the case of high voltage ICs comprising MOS transistors, High Voltage (HV) MOS transistors (hereinafter, HV transistors) need to be designed and integrated, which are adapted to guarantee the capability of sustaining, at least between a pair of their terminals, voltages difference up-limited by the predetermined maximum voltage difference ΔVmh, higher than the IC supply voltage Vdd. In particular, HV transistors may have a gate oxide layer thicker than that normally used for the standard, Low Voltage (LV) transistors, i.e., the MOS transistors typically used in low voltage ICs. HV transistors thus have a higher threshold voltage value, and the use of a thicker gate oxide avoids occurrences of oxide breaking, even with relatively high voltage differences applied between gate and channel.

However, the necessity of using HV transistors poses constraints to the technology used to fabricate the IC. More particularly, even if the scaling of the transistors size, made possible by the evolution of the manufacturing technologies, allows to drastically reduce the dimensions of the LV transistors, the gate oxide thickness of the HV transistors can not be thinned. Consequently, it is not possible to shrink the dimensions of the HV transistors, and thus it is hard to achieve the desired reduction in the silicon area occupied by the ICs including high voltage circuits.

One of the methods that is more commonly adopted, is to design high voltage circuits using both LV and HV transistors. More particularly, since the HV transistors occupy more silicon area compared to the LV transistors, it is possible to save silicon area using HV transistors only where they are strictly necessary. However, this method has a major drawback, given by the fact that the manufacturing process has to include a higher number of processing steps and masks, for example for differentiating the oxide thickness and the threshold voltages of the HV and LV transistors.

The relatively high voltages needed by an IC may be provided from the outside of the IC, or, more advantageously, in so-called Single Power Supply (SPS) ICs, they are generated directly on chip. In the latter case, the generation of the high voltages is accomplished by dedicated boosting circuits, like charge pumps, capable of generating voltages higher than the IC supply voltage, starting from the latter. It has to be noted that the term "voltages higher than the supply voltage", has to be intended both as "voltages higher than the positive supply voltage" (namely, Vdd), and "voltages lower than the most negative supply voltage" (i.e., the ground voltage GND).

In particular, positive charge pumps are adapted to generate positive voltages higher than the starting IC supply voltage, whereas negative charge pumps are adapted to generate negative voltages, starting from the IC supply voltage.

Known types of charge pumps are the so called "parallel charge pumps" and "serial charge pumps". Both comprise a plurality of cascade-connected stages, each one including a capacitor. The difference essentially consists in the fact that while in a parallel charge pump there is a phase in which the capacitors are arranged in parallel, in a serial charge pump there is a phase in which the capacitors are connected in series. Both parallel and serial charge pumps, in known circuit design, need the use of HV transistors.

In view of the state of the art outlined in the foregoing, the Applicant has faced the problem of how to improve the known solution for implementing charge pumps. Particularly, the Applicant has tackled the problem of how to realize a charge pump that does not make use of HV transistors.

The Applicant has found that, by adopting a serial charge pump architecture, it is possible to avoid using HV MOS transistors.

According to an aspect of the present invention, a charge pump is provided as set forth in the appended claim 1. The charge pump circuit comprises at least one pump stage. Said pump stage includes a capacitor having a first plate and a second plate. The pump stage further includes a first circuital node connected to the first plate, a voltage of the first circuital node is forced to a first forced voltage during a forcing phase of the charge pump operation, and a second circuital node connected to the second plate, a voltage of the second circuital node is forced to a second forced voltage during the forcing phase. The voltages of the first and the second circuital nodes are free of changing with respect to the first and to the second forced voltage, respectively, except during said forcing phase. The pump stage still further includes a first forcing circuit associated to the first circuital node, the first forcing circuit being activable for forcing the voltage of the first circuital node to the first forced voltage during the forcing phase, and a second forcing circuit associated to the second circuital node, the second forcing circuit being activable for forcing the voltage of the second circuital node to the second forced voltage during the forcing phase. The first and second forcing circuits comprise each at least one electronic device having terminals. Said at least one electronic device is designed to guarantee the capability of sustaining voltage differences across the terminals thereof that are up-limited in absolute value by a predetermined maximum voltage equal to the a multiple of the absolute value of the difference between the first and the second forcing voltages and lower than an absolute value of a charge pump voltage. The first and second forcing circuits include means for ensuring that the voltage difference applied across pair of terminals of said at least one electronic device is not higher than the predetermined maximum voltage when at least one among the voltages of the first and the second circuital nodes change to a voltage higher in absolute value than said predetermined maximum voltage.

The characterizing features of the present invention are set forth in the appended claims. The invention itself, however, as well as further features and advantages thereof will be best understood by reference to the following detailed description, given purely by way of a non-restrictive indication, to be read in conjunction with the accompanying drawings:
Figure 1 illustrates a schematic view of a positive serial charge pump according to a first embodiment of the present invention;
Figures 2A, 2B and 2C illustrate the voltage values of a plurality of circuital nodes of the charge pump of Figure 1 during three operating phases thereof;
Figures 3A-3F illustrates the circuital structure of forcing circuits connected to the nodes of the charge pump of Figure 1;
Figure 3G shows the circuital structure of a voltage regulator included in the pump, according to a second embodiment of the invention;
Figure 3H shows the circuital structure of a voltage regulator included in the pump, according to a third embodiment of the invention;
Figure 4 illustrates a schematic view of a negative serial charge pump according to a fourth embodiment of the present invention;
Figures 5A, 5B and 5C illustrate the voltage values of a plurality of circuital nodes of the charge pump of Figure 4 during three operating phases thereof; and
Figures 6A-6F illustrates the circuital structure of forcing circuits connected to the nodes of the charge pump of Figure 4.

In the following, two types of serial charge pumps according to possible embodiments of the present invention will be described, namely a positive charge pump and a negative charge pump.

### POSITIVE CHARGE PUMP

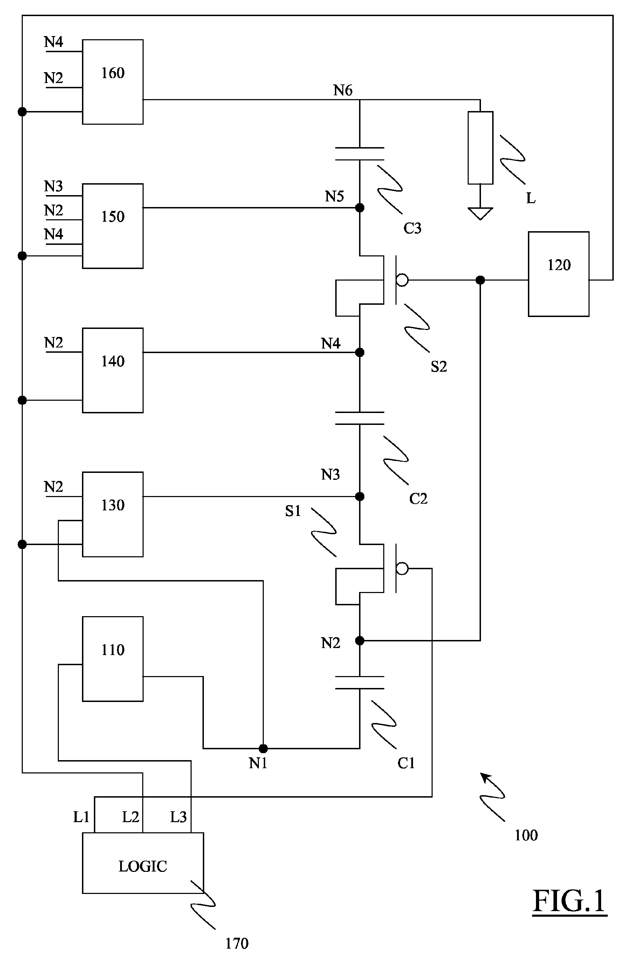

Referring in particular to Figure 1, a positive serial charge pump 100 according to an embodiment of the present invention is schematically illustrated. The purpose of the charge pump 100 is to generate positive voltages higher than the IC supply voltage, starting from the latter. More particularly, the charge pump 100 includes a cascade of stages, in the example herein considered three stages. For example, the charge pump 100 is integrated in an IC, such as a semiconductor memory IC, and is adapted to generate a relatively high voltage used to program/erase memory cells. It has to be noted that the charge pump herein described is an exemplary one, in the sense that the number of stages (and thus the number of capacitors) is merely indicative. Indeed, the teachings of the present invention may be referred also to a positive charge pump having a different number of capacitors (and thus, having different voltage values at the output node).

The generic stage includes a capacitor, like the three capacitors C1, C2, C3. The three capacitors are series connected by means of two switches S1, S2.

The charge pump also includes a plurality of forcing circuits 110, 120, 130, 140, 150, 160 adapted to force voltages on a plurality of nodes N1, N2, N3, N4, N5, N6 of the charge pump in such a way to properly charge the capacitors C1, C2 and C3, and a logic block 170, adapted to generate control signals whose purpose will be explained in the following of the description.

More particularly, the capacitor C1 includes a first plate (in correspondence of the node N1) connected to an output terminal of the forcing circuit 110, and a second plate (in correspondence of the node N2) that is connected to a first terminal of the switch S1. Moreover, the node N1 is further connected to an input terminal of the forcing circuit 130, and the node N2 is further connected to an output terminal of the forcing circuit 120.

The switch S1 includes a P-channel MOS (hereinafter, PMOS) transistors having a first and a second terminals (the drain/source terminals), a control terminal (the gate terminal) and a bulk terminal. Since MOS transistors are semiconductor devices having a symmetric structure, with the drain and source terminals that are interchangeable, for the sake of simplicity, in this description drain and source terminals will be not clearly distinguished, and reference will be made only to generic "first" and "second" terminals. The gate terminal of the PMOS transistor of the switch S1, i.e. the switch control terminal, is connected to a first output terminal of the logic block 170 (node L1), the bulk terminal is connected to the node N2, and the second terminal, forming the second terminal of the switch S1, is connected to the first plate of the capacitor C2 (in correspondence of the node N3). Moreover, the node N3 is connected to an output terminal of the forcing circuit 130.

The capacitor C2 has a second plate connected to a first terminal of the switch S2 (in correspondence of the node N4). The node N4 is further connected to an output node of the forcing circuit 140.

The switch S2 includes a P-channel MOS transistor having a control terminal (the gate terminal) connected to the node N2, a bulk terminal connected to the node N4, a first terminal forming the first terminal of the switch, and a second terminal, forming a second terminal of the switch S2, connected to a first plate of the capacitor C3 (in correspondence of the node N5). Moreover, the node N5 is further connected to an output terminal of the forcing circuit 150.

The capacitor C3 has a second plate connected to an output terminal of the forcing circuit 160, in correspondence of the node N6. The node N6, forming the output node of the charge pump, is further connected to a load, schematized as a bipole L. For example, the load may be a part of the IC wherein the charge pump is integrated that needs to use the relatively high voltage generated by the charge pump.

The logic block 170 further includes a second output terminal connected to input terminals of the forcing circuits 120, 130, 140, 150 and 160 (node L2), and a third output terminal connected to an input terminal of the forcing circuit 110 (node L3).

The forcing circuits 130 and 140 have a respective further input terminal connected to the node N2; the forcing circuit 150 has three further input terminals connected to the nodes N4, N2 and N3 respectively; the forcing circuit 160 has two further input terminals connected to the node N2 and N4 respectively.

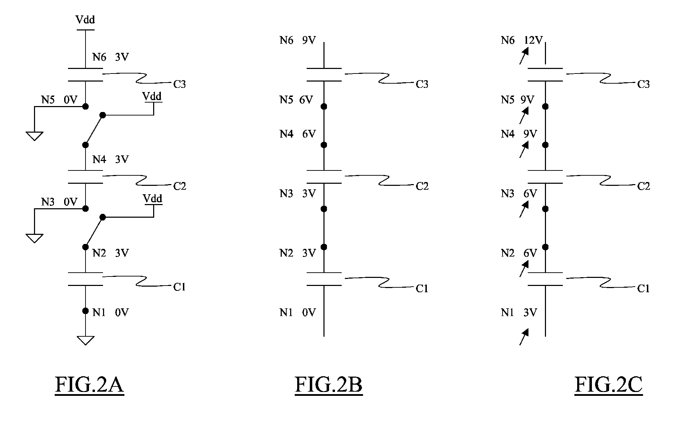

To better explain the operation of the charge pump 100, reference will be made now to the Figures 2A, 2B and 2C, illustrating simplified equivalent circuits of the charge pump 100 during three different operating phases: a precharging phase (Figure 2A), a charge sharing phase (Figure 2B), and a voltage boosting phase (Figure 2C). More particularly, in the charge pump operation, these three phases are repeatedly performed.

The first, precharging phase serves to charge each one of the capacitors C1, C2 and C3 to the supply voltage Vdd of the IC (in this example equal to 3 Volts). In particular, during this phase, the switches S1 and S2 are open, and each capacitor C1, C2 and C3 is thus isolated from the other two. The forcing circuits act on the corresponding nodes, so as to bias the first plates of the capacitors to voltages equal to the ground voltage GND, and to bias the second plates of the capacitors to the supply voltage Vdd. Consequently, the forcing circuit 110 biases the node N1 to the ground voltage GND; the forcing circuit 120 biases the node N2 to the supply voltage Vdd, in the example of 3 Volts; the forcing circuit 130 biases the node N3 to the ground voltage GND; the forcing circuit 140 biases the node N4 to a voltage of 3 Volts; the forcing circuit 150 biases the node N5 to the ground voltage GND; and the forcing circuit 160 biases the node N6 to a voltage of 3 Volts.

After the precharging phase, each capacitor C1, C2, C3 stores an electrical charge that depends on the respective capacitance value, and on the voltage difference applied across its plates. For example, assuming that all the capacitors C1, C2 and C3 have the same capacitance value, and since in the precharging phase a voltage difference equal to the supply voltage Vdd is applied across the plates of each one of the capacitors C1, C2, C3 thanks to the series connection of all the capacitors guaranteed by the particular topology of the charge pump, each capacitor stores essentially an equal amount of electrical charge.

In the second, charge sharing operating phase, the switches S1 and S2 are made to close, so as to connect in series the capacitors C1, C2, C3. Thanks to the series connection, the electrical charge previously stored in each capacitor C1, C2, C3 is shared with that stored in the adjacent capacitor. Moreover, the forcing circuits associated with the nodes that modify their voltage values during this phase are disconnected from the corresponding nodes, where, by "disconnected" there is intended lacking of low-impedance path towards a terminal providing the supply voltage Vdd or a terminal providing the ground voltage GND.

Consequently, the stored electrical charge is redistributed along the series connection. This involves a change of the voltages at each node of the pump 100. More particularly, while the node N1 remains at the ground voltage GND and the node N2 remains at 3 Volts, the voltage at node N3 becomes equal to 3 Volts, the voltage at node N4 becomes equal to 6 Volts, the voltage at node N5 becomes equal to 6 Volts, and the voltage at node N6 becomes equal to 9 Volts.

In the third, boosting phase. the switches S1 and S2 remain closed as in the previous phase, and the forcing circuit 110 brings the node N1 from the ground voltage GND to a voltage of 3 volts. Since all the nodes are connected by means of a capacitive serial connection, the voltage at each node N2, N3, N4, N5, N6 is consequently incremented by 3 Volts: the voltage at node N2 (now short circuited to node N3) becomes equal to 6 volts, the voltage at node N4 (short-circuited to node N5) becomes equal to 9 Volts, and the voltage at node N6 becomes equal to 12 Volts.

As previously discussed, the precharging phase, the charge sharing phase, and the boosting phase are repeatedly performed in succession. In this way, the output voltage provided to the load L (i.e., the voltage of the node N6) oscillates among the values of 3 Volts (precharging phase), 9 Volts (charge-sharing phase) and 12 Volts (boosting phase). The unavoidable draining of electrical charge by the load L from the one stored in the series connection of the capacitors C1, C2 and C3 is counterbalanced during the boosting phase by the forcing circuit 110, that continuously re-supplies the electrical charge to the series connection of the capacitors.

In practical implementations, the load L is usually connected to the node N6 of the charge pump 100 by means of a voltage regulator (not shown in the Figure), that allows reducing the voltage swing on the node N6, in such a way to obtain an output voltage that is as stable as possible.

Referring back to the Figures 1, 2A, 2B and 2C, the voltage values taken by each node of the charge pump 100 are shown for each one of the three phases.

The detailed structure of the forcing circuits 110 to 160 according to a possible embodiment of the present invention will be now presented.

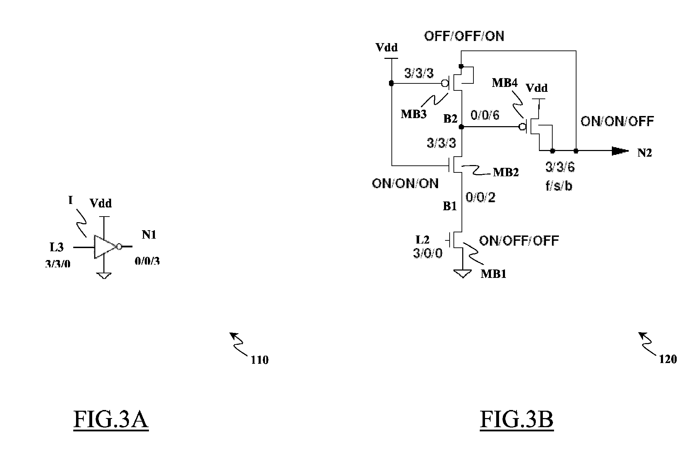

Referring to Figure 3A the forcing circuit 110 includes a logic inverter I (e.g., a CMOS inverter) that receives as voltage supplies the supply voltage Vdd and the ground voltage GND. The inverter I includes an input terminal connected to a node L3 which is connected to an output of the logic block 170, and an output terminal connected to the node N1.

During the precharging and the charge-sharing phases, an input signal provided by logic block 170 to the inverter I takes a voltage equal to 3 Volts, thereby an inverter output signal takes a voltage of 0 Volts (i.e., the ground voltage GND). During the boosting phase, the input signal provided by the logic block 170 takes the ground voltage GND. Consequently, the output signal takes a voltage equal to 3 Volts.

It can be appreciated that in this way the node N1 takes the voltage values described previously and shown in Figures 2A, 2B, and 2C.

Referring to Figure 3B, the forcing circuit 120 includes a NMOS transistor MB1, having a first terminal connected to a terminal providing the ground voltage GND, a gate terminal connected to an output (node L2) of the logic block 170 and a second terminal connected to a first terminal of a further NMOS transistor MB2 and forming a circuit node B1. The NMOS transistor MB2 further includes a gate terminal connected to a terminal providing the supply voltage Vdd, and a second terminal connected to a first terminal of a PMOS transistor MB3 and forming a circuit node B2. The PMOS transistor MB3 further includes a gate terminal connected to a terminal providing the supply voltage Vdd, a second terminal connected to the node N2, and a bulk terminal connected to the node N2. The forcing circuit 120 further includes a PMOS transistor MB4 having a first terminal connected to the node N2, a second terminal connected to a terminal providing the supply voltage Vdd, a gate terminal connected to the node B2, and a bulk terminal connected to the node N2. In the following description, and in the remaining of the present description, it is assumed for the sake of simplicity that the threshold values of both the NMOS and PMOS transistors are equal to 1 Volt (i.e., +1 volt for the NMOS transistors, and -1V for the PMOS transistors); this is however not to be intended as a limitation of the present invention.

During the precharging phase, the logic block 170 provides a voltage equal to 3 Volts to the gate terminal of the NMOS transistor MB1, activating it, and thus pulling the voltage of the node B1 down to the ground voltage GND. Since the voltage of the gate terminal of the NMOS transistor MB2 is equal to 3 Volts, the latter transistor is on, and thus the voltage of the node B2 (and of the gate terminal of the PMOS transistor MB4) is pulled to the ground voltage GND. Consequently, the PMOS transistor MB4 is turned on, and the node N2 takes a voltage equal to 3 Volts, as requested by the correct functioning of the charge pump 100. During the precharging phase, the PMOS transistor MB3 is off, because neither its first terminal nor its second terminal take a voltage value higher than 3 Volts.

During the charge-sharing phase, the logic block 170 provides to the gate terminal of the NMOS transistor MB 1 the ground voltage GND, thus turning it off. The node B1 remains floating at the ground voltage GND. During the charge sharing phase, the node N2 remains at 3 Volts, and thus the PMOS transistor MB4 remains turned on. The transistors MB2 and MB3 remains in the same state of the previous phase (on and off, respectively).

During the boosting phase, the node N2 takes a voltage value equal to 6 Volts, capable of turning the PMOS transistor MB3 on, which in turn provides the 6 Volts voltage to the node B2. Consequently, the PMOS transistor MB4 is turned off. Meanwhile, the gate terminal of the NMOS transistor MB1 remains at the ground voltage, keeping the transistor turned off. Since even during this phase the NMOS transistor MB2 has its gate terminal at a voltage equal to 3 Volts, it remains turned on and sets the voltage value of the node B1 to 2 Volts (i.e., the voltage at its gate terminal minus the threshold voltage value).

As can be seen, the voltage values taken by each node of the forcing circuit 120 during each one of the three operating phases are such to allow the use of LV transistors. In fact, in each transistor, the voltage differences across its terminals are at most equal to 3 Volts (i.e., the value of the supply voltage Vdd).

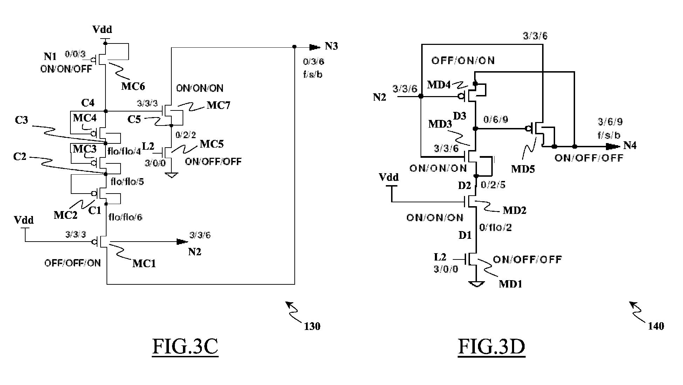

Referring to Figure 3C, the forcing circuit 130 includes a PMOS transistor MC1, having a first terminal connected to the node N3, a gate terminal connected to a terminal providing the supply voltage Vdd, a bulk terminal connected to the node N2, and a second terminal connected to a first terminal of a PMOS transistor MC2, forming a circuit node C1. The PMOS transistor MC2 further includes a bulk terminal connected to the node C1, a gate and a second terminals, one connected to each other, forming a circuit node C2. In this way the NMOS transistor MC2 is arranged in a so called diode-configuration. The node C2 is connected to a first terminal and to a bulk terminal of a further PMOS transistor MC3, that further includes a gate and a second terminals, one connected to each other, and forming a circuit node C3. Even in this case, the PMOS transistor is arranged in a diode-configuration. Similarly, the node C3 is connected to a first terminal and to a bulk terminal of a further PMOS transistor MC4, that further includes a gate and a second terminals, one connected to each other, forming a circuit node C4. Even in this case, the PMOS transistor is arranged in a diode-configuration. The node C4 is further connected to a first terminal of a PMOS transistor MC6 and to a gate terminal of a NMOS transistor MC7. The PMOS transistor MC6 further includes a gate terminal connected to the node N1, a second terminal connected to a terminal providing the supply voltage Vdd, and a bulk terminal connected to the second terminal. The NMOS transistor MC7 further includes a first terminal connected to a second terminal of a NMOS transistor MC5, forming a circuit node C5, a bulk terminal connected to the node C5, and a second terminal connected to the node N3. The NMOS transistor MC5 further includes a first terminal connected to a terminal providing the ground voltage GND, and a gate terminal connected to an output node (node L2) of the logic block 170.

During the precharging phase, the logic block 170 provides a voltage equal to 3 Volts to the gate terminal of the NMOS transistor MC5, activating it; thus, the voltage of the node C5 is pulled to the ground voltage GND. This implies that the NMOS transistor MC7 is turned on, because its gate voltage is driven to 3 Volts by the PMOS transistor MC6, which has the gate terminal that is at the ground voltage GND, and the second terminal at a voltage equal to 3 Volts. Consequently to the fact that both the NMOS transistors MC5 and MC7 are turned on, the node N3 takes the ground voltage GND, as requested by the correct functioning of the charge pump 100. During the precharging phase, the PMOS transistors MC1, MC2, MC3 and MC4 are turned off, and the nodes C1, C2, C3 are floating. Moreover, the bulk terminal of the PMOS transistor MC1 is driven to a voltage value of 3 Volts.

During the charge-sharing phase, the logic block 170 provides to the gate terminal of the NMOS transistor MC5 the ground voltage GND, thus turning it off. Since the PMOS transistor MC6 remains turned on (having the second terminal at a voltage of 3 Volts and the gate terminal at the ground voltage GND), the gate terminal of the NMOS transistor MC7 remains at a voltage of 3 Volts. This implies that the NMOS transistor MC7 remains on, and the node C5 takes a voltage value equal to 2 Volts (the voltage at its gate terminal minus the threshold voltage value). During the sharing phase, the node N3 takes a voltage value of 3 Volts, leaving the PMOS transistor MC1 turned off (its gate terminal has a voltage value equal to 3 Volts). As in the precharging phase, also the PMOS transistors MC2, MC3, MC4 remain turned off, and the nodes C1, C2 and C3 are floating.

During the boosting phase, the node N3 takes a voltage value equal to 6 volts and the gate terminal of the PMOS transistor MC6 takes a voltage value equal to 3 Volts (turning it off), while the logic block 170 still provides the ground voltage GND to the gate terminal of the NMOS transistor MC5, and the bulk terminal of the PMOS transistor MC1 is driven to a voltage value of 6 Volts, capable of turning the PMOS transistor MC1 on, which pulls the voltage of the node C1 to 6 Volts. Consequently, the three diode-configured PMOS transistors MC2, MC3 and MC4 turn on, allowing to provide to the node C4 a voltage value of 3 Volts (that can not be provided by the PMOS transistor MC6, that is turned off in this phase). More particularly, each one of the PMOS transistor MC2, MC3 and MC4 acts as a diode having a threshold voltage value of 1 Volts, and so the node C2 takes a voltage value of 5 Volts, the node C3 takes a voltage value of 4 Volts, and the node C4 takes a voltage values of 3 Volts.

Even in this case, the voltage values taken by each node of the forcing circuit 130 during each one of the three operating phases are such to allow the use of LV transistors. In fact, in each transistor, the voltage differences across its terminals are at most equal to 3 Volts.

Referring to Figure 3D, the forcing circuit 140 includes a NMOS transistor MD1, having a first terminal connected to a terminal providing the ground voltage GND, a gate terminal connected to an output node (node L2) of the logic block 170, and a second terminal connected to a first terminal of a further NMOS transistor MD2, forming a circuit node D1. The NMOS transistor MD2 further includes a gate terminal connected to a terminal providing the supply voltage Vdd, and a second terminal connected to a first terminal of a NMOS transistor MD3, forming a circuit node D2. The NMOS transistor MD3 further includes a gate terminal connected to the node N2, a bulk terminal connected to the node D2, and a second terminal connected to a first terminal of a PMOS transistor MD4, forming a circuit node D3. The PMOS transistor MD4 further includes a gate terminal connected to the node N2, a second terminal connected to the node N4, and a bulk terminal connected to the node N4. The forcing circuit 120 further includes a PMOS transistor MD5 having a first terminal connected to the node N4, a second terminal connected to the node N2, a gate terminal connected to the node D3, and a bulk terminal connected to the node N4.

During the precharging phase, the logic block 170 provides a voltage equal to 3 Volts to the gate terminal of the NMOS transistor MD1, activating it, and thus pulling the voltage of the node D1 to the ground voltage GND. Since the voltage of the gate terminal of the NMOS transistor MD2 is equal to 3 Volts, the latter transistor is turned on, and thus the voltage of the node D2 is pulled to the ground voltage GND too. Again, thanks to the voltage value of 3 Volts of the node N2, the NMOS transistor MD3 is turned on, and thus the latter transistor provides the ground voltage GND to the node D3. The ground voltage GND is in turn provided to the gate terminal of the PMOS transistor MD5, that is turned on. In this way, the node N4 is driven to the voltage of the node N2, i.e., 3 Volts. The PMOS transistor MD4 remains turned off during the precharging phase, because its gate terminal, has a voltage value (3 Volts) that it is not lower neither than the one of its first terminal (0 Volts), nor than the one of its second terminal (3 Volts).

During the charge-sharing phase, the logic block 170 provides to the gate terminal of the NMOS transistor MD1 the ground voltage GND, thus turning it off. The node D1 remains floating at zero voltage. During the charge-sharing phase, the node N4 takes a voltage value of 6 Volts, while the node N2 remains at a voltage value of 3 Volts. This implies that the PMOS transistor MD4 turns on, providing a voltage value of 6 Volts to the node D3, in such a way that the PMOS transistor MD5 is turned off. Moreover, the NMOS transistors MD2 and MD3 remain turned on, and the node D2 takes a voltage value of 2 Volts (the voltage at its gate terminal minus the threshold voltage value).

During the boosting phase, the node N4 takes a voltage value equal to 9 Volts, the node N2 takes a voltage value of 6 Volts, while the logic block 170 continues to provide the ground voltage GND to the gate terminal of the NMOS transistor MD1, that remains turned off. Thanks to these voltage values, the PMOS transistor MD4 remains on, having the voltage at the its second terminal higher than the voltage at its gate terminal, keeping the PMOS transistor MD5 turned off. According to the voltage value of 6 Volts at the node N2, the NMOS transistor MD3 remains on, and the node D2 takes consequently a voltage value of 5 Volts. Moreover, during the boosting phase, the NMOS transistor MD2 remains turned on too, providing a voltage value of 2 Volts at the node D1.

Even in this case, the voltage values taken by each node of the forcing circuit 140 during each one of the three operating phases are such to allow the use of LV transistors. In fact, in each transistor, the voltage differences across its terminals are at most equal to 3 Volts.

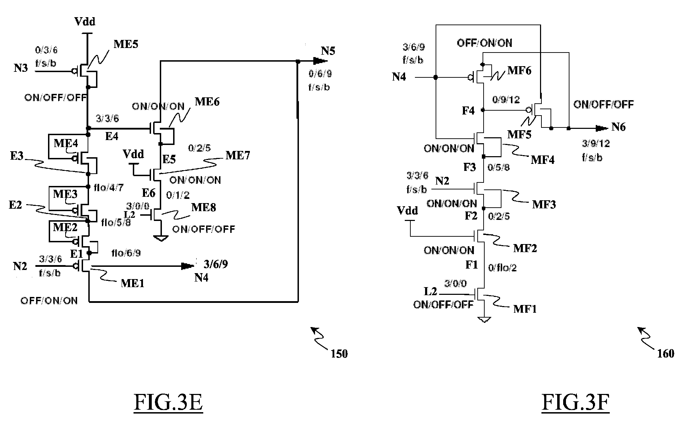

Referring to Figure 3E, the forcing circuit 150 includes a PMOS transistor ME1, having a first terminal connected to the node N5, a gate terminal connected to the node N2, a bulk terminal connected to the node N4, and a second terminal connected to a first terminal of a PMOS transistor ME2, forming a circuit node E1. The PMOS transistor ME2 further includes a bulk terminal connected to the node E1, and a gate and a second terminals, one connected to each other, forming a circuit node E2. In this way the NMOS transistor ME2 is arranged in a diode-configuration. The node E2 is connected to a first terminal and to a bulk terminal of a further PMOS transistor ME3, that further includes a gate and a second terminals, one connected to each other, and forming a circuit node E3. Even in this case, the PMOS transistor is arranged in a diode-configuration. Similarly, the node E3 is connected to a first terminal and to a bulk terminal of a further PMOS transistor ME4, that further includes a gate and a second terminals, one connected to each other, forming a circuit node E4. Even in this case, the PMOS transistor is arranged in a diode-configuration. The node E4 is further connected to a first terminal of a PMOS transistor ME5 and to a gate terminal of a NMOS transistor ME6. The PMOS transistor ME5 further includes a gate terminal connected to the node N3, a second terminal connected to a terminal providing the supply voltage Vdd, and a bulk terminal connected to the second terminal. The NMOS transistor ME6 further includes a first terminal connected to a second terminal of a NMOS transistor ME7, forming a circuit node E5, a bulk terminal connected to the node E5, and a second terminal connected to the node N5. The NMOS transistor ME7 further includes a first terminal connected to a second terminal of a NMOS transistor ME8, and a gate terminal connected to a terminal providing the supply voltage Vdd. The NMOS transistor ME8 further includes a gate terminal connected to an output (node L2) of the logic block 170 and a first terminal connected to a terminal providing the ground voltage GND.

During the precharging phase, the logic block 170 provides a voltage equal to 3 Volts to the gate terminal of the NMOS transistor ME8, activating it; thus, the voltage of the node E6 is pulled to the ground voltage GND. The NMOS transistor ME7 is turned on, because its gate voltage is equal to 3 Volts, and thus also the voltage of the node E5 is pulled to the ground voltage GND. This implies that the NMOS transistor ME6 is turned on, because its gate voltage is driven to 3 Volts by the PMOS transistor ME5, which has the gate terminal at the ground voltage GND, and the second terminal at a voltage equal to 3 Volts. Consequently to the fact that the NMOS transistors ME6, ME7 and ME8 are turned on, the node N5 takes the ground voltage GND, as requested by the correct functioning of the charge pump 100. During the precharging phase, the PMOS transistors ME1, ME2, ME3 and ME4 are turned off, and the nodes E1, E2, E3 are floating. Moreover, the bulk terminal of the PMOS transistor ME1 is driven to a voltage value of 3 Volts.

During the charge-sharing phase, the logic block 170 provides to the gate terminal of the NMOS transistor ME8 the ground voltage GND, thus turning it off. The MOS transistor ME7 remains turned on, providing a voltage of 2 Volts to the node E6. Moreover, the node N3 takes a voltage value of 3 Volts, turning off the PMOS transistor ME5, and the node N5 takes a voltage value equal to 6 Volts, capable of turning the PMOS transistor ME1 on (the bulk terminal thereof is driven to a voltage value of 9 Volts), which pulls the voltage of the node E1 to 6 Volts. Consequently, the three diode-configured PMOS transistors ME2, ME3 and ME4 turn on, allowing to provide to the node E4 a voltage value of 3 Volts (that can not be provided by the PMOS transistor ME5, that is turned off in this phase). More particularly, each one of the PMOS transistor ME2, ME3 and ME4 acts as a diode having a threshold voltage value of 1 Volt, and so the node E2 takes a voltage value of 5 Volts, the node E3 takes a voltage value of 4 Volts, and the node E4 takes a voltage values of 3 Volts. This implies that the NMOS transistor ME6 remains on, and the node E5 takes a voltage value equal to 2 Volts (the voltage at its gate terminal minus the threshold voltage value).

During the boosting phase, the node N5 takes a voltage value equal to 9 volts and the gate terminal of the PMOS transistor ME5 takes a voltage value equal to 6 Volts (remaining turned off), while the logic block 170 still provides the ground voltage GND to the gate terminal of the NMOS transistor ME8, and the bulk terminal of the PMOS transistor ME1 is driven to a voltage value of 9 Volts. The MOS transistor ME7 remains turned on, providing again a voltage of 2 Volts to the node E6. The voltage of 9 Volts, capable of keeping the PMOS transistor ME1 turned on, implies that the voltage of the node C1 takes a value of 9 Volts. Consequently, the three diode-configured PMOS transistors MC2, MC3 and MC4 allow to provide to the node E4 a voltage value of 6 Volts (that can not be provided by the PMOS transistor ME5, that is turned off even in this phase). More particularly, the node E2 takes a voltage value of 8 Volts, the node E3 takes a voltage value of 7 Volts, and the node E4 takes a voltage values of 6 Volts. This in turn keeps the NMOS transistor ME6 turned on, with the node E5 that takes a voltage value equal to 2 Volts.

Even in this case, the voltage values taken by each node of the forcing circuit 150 during each one of the three operating phases are such to allow the use of LV transistors. In fact, in each transistor, the voltage differences across its terminals are at the limit of 3 Volts, and not beyond.

Referring now to Figure 3F, the forcing circuit 160 includes a NMOS transistor MF1, having a first terminal connected to a terminal providing the ground voltage GND, a gate terminal connected to an output (node L2) of the logic block 170, and a second terminal connected to a first terminal of a further NMOS transistor MF2, forming a circuit node F1. The NMOS transistor MF2 further includes a gate terminal connected to a terminal providing the supply voltage Vdd, and a second terminal connected to a first terminal of a NMOS transistor MF3, forming a circuit node F2. The NMOS transistor MF3 further includes a gate terminal connected to the node N2, a bulk terminal connected to the node F2, and a second terminal connected to a first terminal of a NMOS transistor MF4, forming a circuit node F3. The NMOS transistor MF4 further includes a gate terminal connected to the node N4, a bulk terminal connected to the node F3, and a second terminal connected to a first terminal of a PMOS transistor MF6. The PMOS transistor MF6 further includes a gate terminal connected to the node N4, a second terminal connected to the node N6, and a bulk terminal connected to the node N6. The forcing circuit 160 further includes a PMOS transistor MF5 having a first terminal connected to the node N6, a second terminal connected to the node N4, a gate terminal connected to the node F4, and a bulk terminal connected to the node N6.

During the precharging phase, the logic block 170 provides a voltage equal to 3 Volts to the gate terminal of the NMOS transistor MF1, activating it, and thus pulling the voltage of the node F1 to the ground voltage GND. Since the voltage of the gate terminal of the NMOS transistor MF2 is equal to 3 Volts, the latter transistor is on, and thus the voltage of the node F2 is pulled to the ground voltage GND too. Again, thanks to the voltage value of 3 Volts of the node N2, the NMOS transistor MF3 is turned on, and thus the latter transistor provides the ground voltage GND to the node F3. Being the voltage value of its gate terminal equal to 3 Volts, also the NMOS transistor MF4 is turned on. Consequently, the NMOS transistor MF4 provides the ground voltage GND to the node F4. The ground voltage GND is in turn provided to the gate terminal of the PMOS transistor MF5, that is turned on. In this way, the node N6 is driven to the voltage of the node N4, i.e., 3 Volts. The PMOS transistor MF6 remains turned off during the precharging phase, because its gate terminal has a voltage value (3 Volts) that it is not lower neither than the one of its first terminal (0 Volts), nor than the one of its second terminal (3 Volts).

During the charge-sharing phase, the logic block 170 provides to the gate terminal of the NMOS transistor MF1 the ground voltage GND, thus turning it off. The node F1 remains floating. During the charge-sharing phase, the node N6 takes a voltage value of 9 Volts, while the node N2 remains at a voltage value of 3 Volts and the node N4 takes a voltage value of 6 Volts. This implies that the PMOS transistor MF6 turns on, providing a voltage value of 9 Volts to the node F4, in such a way that the PMOS transistor MF5 is turned off. Moreover, the NMOS transistors MF2, MF3 and MF4 remain turned on, and the nodes F2 and F3 take voltage values of 2 and 5 Volts, respectively.

During the boosting phase, the node N6 takes a voltage value equal to 12 Volts, the nodes N2 and N4 take a voltage value of 6 Volts, while the logic block 170 continues to provide the ground voltage GND to the gate terminal of the NMOS transistor MF1, that remains turned off. Thanks to these voltage values, the PMOS transistor MF4 remains on, having the voltage at the its second terminal higher than the voltage at its gate terminal, keeping the PMOS transistor MF5 turned off. According to the voltage value of 6 Volts at the node N4, the NMOS transistor MF4 remains on, and the node F3 takes consequently a voltage value of 8 Volts. Moreover, the NMOS transistors MF3 and MF2 remain turned on too, providing a voltage value of 2 Volts at the node D1.

Even in this case, the voltage values taken by each node of the forcing circuit 160 during each one of the three operating phases are such to allow the use of LV transistors. In fact, in each transistor, the voltage differences across its terminals are at most equal to 3 Volts.

Referring back to the Figure 1, and recalling that the switches S1, S2 are to be controlled in such a way to be open (i.e., not conductive) during the precharging phase, and closed (i.e., conductive) during the charge-sharing and the boosting phases, the logic block 170 is capable to provide to the node L1 (i.e., to the gate terminal of the PMOS transistor of the switch S1) a voltage of 3 Volts during the precharging phase (node N2 at a voltage of 3 Volts, switch S1 open) a voltage of 3 Volts during the boosting phase (node N2 at a voltage of 6 Volts, switch S1 closed), and the ground voltage GND during the charge-sharing phase (node N2 at a voltage of 3 Volts, switch S1 closed). Moreover, since the gate terminal of the PMOS transistor of the switch S2 is connected to the node N2, it takes a voltage value of 3 Volts during both the precharging and the charge-sharing phases, and takes a voltage value of 6 Volts during the boosting phase. Consequently, in each one of the two switches S1 and S2, the voltage differences across its terminals are at the limit of 3 Volts, and thus the PMOS transistors therein included may be of the LV transistors type.

According to a further embodiment, the possibility of using so-called Medium Voltage transistors (hereinafter, MV transistors) is contemplated. For the purposes of the present description, an MV transistor is a device designed in such a way to guarantee the capability of sustaining, at least between a pair of its terminals, voltage differences up-limited by a predetermined maximum voltage difference ΔVmm higher than the predetermined maximum voltage difference ΔVml that the LV transistors are guaranteed to sustain (i.e., the supply voltage Vdd), but still lower than the predetermined maximum voltage difference ΔVmh guaranteed by HV transistors (for example, assuming that the HV transistor can sustain the voltage of the last node N6 of the pump, MV transistors are not designed to sustain such a high voltage). Referring again to the example of circuits including MOS transistors, MV MOS transistors may have gate oxides of thickness capable to avoid oxide breaking, with voltage differences Vm applied between gate and channel higher than the supply voltage Vdd, but lower than the voltage outputted by the charge pump at its last node.

The possibility of including such devices in the forcing circuits of the charge pump allows to significantly make simpler the structure thereof. More particularly, since an MV transistor can sustain voltage differences higher than the supply voltage Vdd, the forcing circuits connected to the nodes of the pump that experience voltages equal or lower than Vm (during all the operating phases of the pump, i.e., during the precharging, sharing and boosting phases) can be realized in a simpler way. For example, a forcing circuit that make use of MV transistors can be realized by a single MV transistor, acting as an electronic switch. Said single MV transistor may be directly connected between the corresponding node of the pump and a voltage source providing the voltage value that is to be imposed on the node during the precharging phase (the voltage necessary to control the opening/closing of the switch being for example the voltage of a node of a preceding forcing circuit). When a node has instead to take a voltage higher than Vm, for example during the boosting phase, the forcing circuit connected thereto should have a structure similar to the ones previously described for the exemplary charge pump 100, i.e., including more transistors.

### STABILIZATION AND REGULATION OF THE OUTPUT VOLTAGE

As previously mentioned, the output voltage provided to the load L (i.e., the voltage of the node N6) oscillates among the values of 3 Volts, 9 Volts and 12 Volts. Consequently, since it is desired providing an output voltage as stable as possible to the load L, an output voltage regulation may be required.

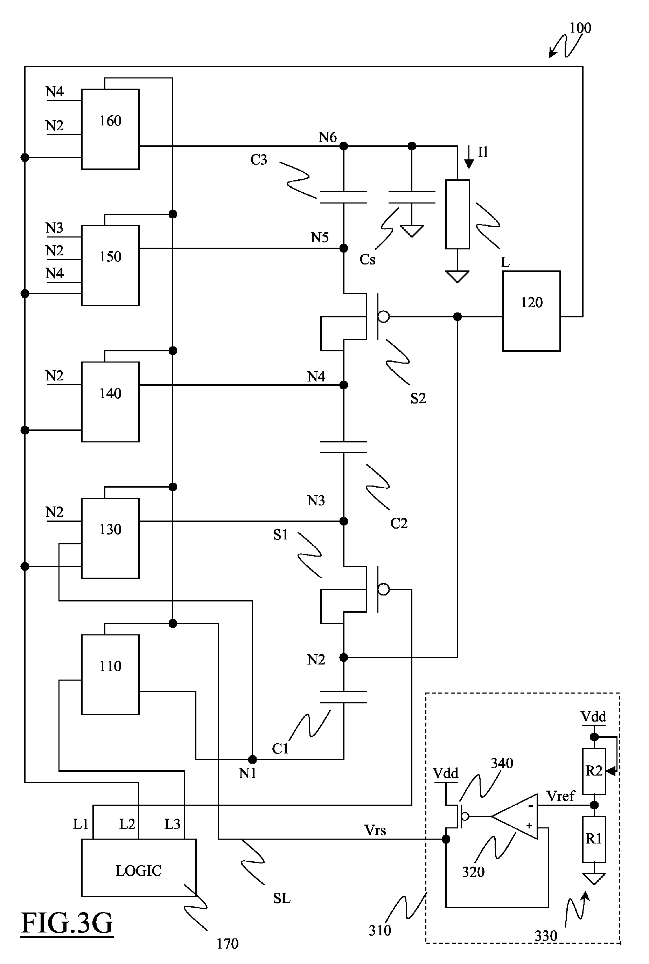

Moreover, the presence of the load L, having in practical cases a finite equivalent impedance, implies an unavoidable draining of electrical charge from the one stored in the series connection of the capacitors C1, C2 and C3. This draining of electrical charge gives rise to an output current Il flowing from the node N6 to the load L (see Figure 3G). The presence of such load current Il causes in turn a lowering of the voltage value outputted by the charge pump. For these reasons, a stabilizer capacitor Cs may be included in the structure of the pump 100, having a first terminal connected to the node N6 and a second terminal connected to a terminal providing the ground voltage GND. The stabilizer capacitor Cs is advantageously implemented in the IC exploiting a depletion region of a semiconductor junction. The stabilizer capacitor Cs introduces a filtering effect (more precisely, a low-pass filtering effect) in correspondence of the node N6. By properly dimensioning the stabilizer capacitor Cs, i.e., opportunely choosing its capacitance value, it is possible limiting, or at least slowing down, the lowering of the voltage value of the node N6 caused by the draining effect due to the presence of the load current Il. In fact, with an adequate capacitance value of the stabilizer capacitor Cs, the electrical charge stored therein may be practically sufficient to supply the load current Il during a cycle of three operating phases of the pump (precharging, charge-sharing, and boosting phase). When the three operating phases are performed again, the electrical charge stored in the stabilizer capacitor Cs is restored by the pump.

As explained in the foregoing, the voltage of the node N6 is ideally capable to assume only three voltage values (3, 9 and 12 Volts); however, the load L may necessitate of voltages different from the ones generated by the charge pump. The voltage of each node of the charge pump 100, and in particular of the node N6, is capable to assume, during the precharging, sharing and boosting phases, a value that is always a multiple of the voltage that supply the pump, in this exemplary case the supply voltage Vdd of 3 Volts.

A first solution for obtaining a regulation of the voltage of the node N6 consists of modulating the amplitude of the voltage that supply the pump, in such a way to be capable of modulating also the voltage of the node N6. For this purpose, a first voltage regulator circuit 310 is included in the charge pump 100. More particularly, the first voltage regulator circuit 310 is adapted to provide a regulated supply voltage Vrs for supplying all the forcing circuits 110-160 by means of a supply line SL. The supply line SL is connected to the forcing circuits 110-160 and to an output terminal of the first voltage regulator circuit 310. The first voltage regulator circuit 310 includes an operational amplifier 320, having a positive input terminal connected to the supply line SL, a negative input terminal connected to a reference generator circuit 330 providing a reference voltage Vref, and an output terminal connected to a gate terminal of a PMOS transistor 340. The PMOS transistor 340 further includes a first terminal connected to the supply line SL and a second terminal connected to a terminal providing the supply voltage Vdd. The reference generator circuit 330 is connected to a terminal providing the supply voltage Vdd and to a terminal providing the ground voltage. The reference generator circuit 330 is capable to generate a reference voltage Vrf having a value ranging from nearly the ground voltage GND to nearly the supply voltage Vdd. For example, the reference generator circuit 330 may include a resistive divider comprising a first resistor R1 and a potentiometer R2. The first resistor R1 has a first terminal connected to a terminal providing the ground voltage GND and a second terminal connected to the negative input terminal of the operational amplifiers 320. The potentiometer R2 has a first terminal connected to the second terminal of the resistor R1, a second terminal connected to a terminal providing the supply voltage Vdd, and a ratio terminal connected to the second terminal. The PMOS transistor 340 and the operational amplifier 320 experience at their terminals voltage differences equal to the supply voltage Vdd or less. Consequently, they can be realized using only LV transistors.

Regulating the potentiometer R2, it is possible to set a desired value for the reference voltage Vrf. Thanks to the negative feedback due to the loop connection of the operational amplifier 320 with the PMOS transistor 340, the value of the regulated supply voltage Vrs tracks the reference voltage Vrf, and is kept stable. In this way, for obtaining a desired voltage value at the node N6, it is necessary to set a corresponding reference voltage Vrf.

Referring to the following table, there are illustrated the voltage values of the nodes N1-N6 (during the boosting phase) for three exemplary different values of reference voltage Vrf.

| **node(s)** | **Vrf=3 Volts** | **Vrf=2,75 Volts** | **Vrf=2,5 Volts** |
|---|---|---|---|
| N6 | 12 Volts | 11 Volts | 10 Volts |
| N5-N4 | 9 Volts | 8,25 Volts | 7,5 Volts |
| N3-N2 | 6 Volts | 5,5 Volts | 5 Volts |
| N1 | 3 Volts | 2, 75 Volts | 2,5 Volts |

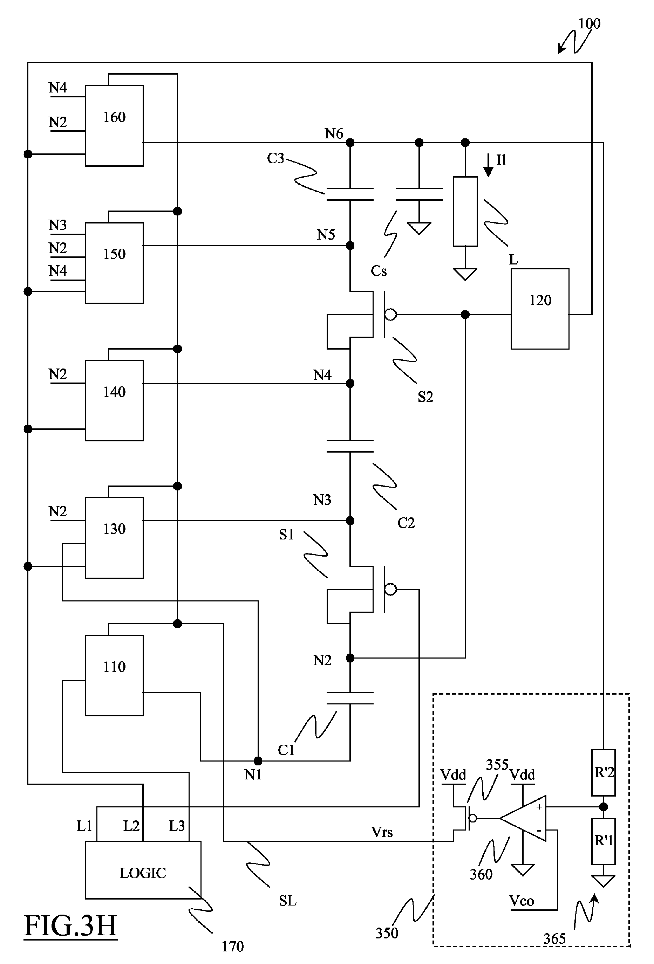

A further solution for stabilizing the voltage of the node N6 is illustrated in Figure 3H. This solution exploits a feedback reaction between the supply voltage and the voltage of the node N6, realized by means of a second voltage regulator circuit 350.

For this purpose, the supply line SL is connected to the forcing circuits 110-160 and to an output terminal of the second voltage regulator circuit 350. The second voltage regulator circuit 350 further includes a PMOS transistor 355 having a first terminal connected to the supply line SL, a second terminal connected to a terminal providing the supply voltage Vdd, and a gate terminal connected to an output terminal of a comparator 360, that receives as voltage supplies the supply voltage Vdd and the ground voltage GND. The comparator 360 further includes a negative input terminal receiving a comparison voltage Vco and a positive input terminal connected to an output terminal of a voltage divider circuit 365. The voltage divider circuit 365 includes a first resistor R1' having a first terminal receiving the ground voltage GND and a second terminal (the output terminal of the voltage divider circuit 365) connected to the positive input terminal of the comparator 360. The voltage divider circuit 365 further includes a second resistor R2' having a first terminal connected to the second terminal of the first resistor R1' and a second terminal connected to the node N6. The resistance value of the second resistor R2' is three times the resistance value of the first resistor R1'. The purpose of the voltage divider circuit 365 is to provide to the negative input terminal of the comparator 360 a voltage which value is such to allow an all-LV transistors implementation of the comparator 360.

More particularly, the resistance values of the first and second resistors R1', R'2 are such that the voltage at the positive input terminal of the comparator 360 results equal to the voltage of the node N6 divided by four. Since the higher possible voltage of the node N6 is equal to four times the value of the supply voltage Vdd, dividing it by four implies having at most a voltage value of 3 Volts, that is, equal to the supply voltage Vdd. In this way, it is possible to implement the comparator 360 using only LV transistors.

During the charge pump operation, the voltage of the node N6 is firstly divided by four to obtain a downscaled voltage, and then is compared with a comparison voltage Vco. As long as the downscaled voltage is lower than the comparison voltage, the comparator 360 keeps the gate terminal of the PMOS transistor 355 to ground, keeping the transistor activated. In this way, the supply line SL provides a voltage equal to the supply voltage Vdd to all the forcing circuits 110-160.

Contrarily, if the downscaled exceeds the comparison voltage Vco, the comparator 360 drives the gate terminal of the PMOS transistor 355 to the supply voltage Vdd, turning it off. In this way, the supply line SL becomes floating, and the charge pump tends to turn off. Consequently, the voltage at the node N6 decreases (due to the load draining current), until it falls below the comparison voltage Vcon. At this point, the output terminal of the comparator 360 is brought to the ground voltage GND, the PMOS transistor 355 is turned on, and the supply line SL is brought again to the supply voltage Vdd.

In this way, it is possible regulating the voltage at of the node N6 establishing a maximum allowable value thereof. More particularly, since the comparator 360 performs a comparison exploiting the voltage of the node N6 divided by four and the comparison voltage Vco, said maximum allowable voltage is equal to four times the comparison voltage Vco.

### NEGATIVE CHARGE PUMP

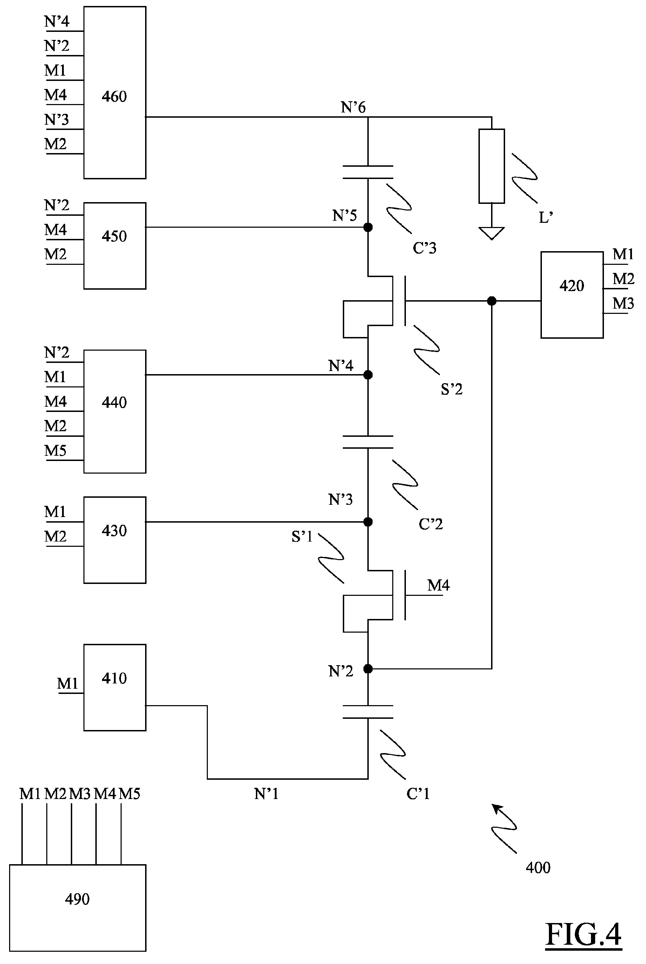

Referring to Figure 4, a negative serial charge pump 400 according to an embodiment of the present invention is schematically illustrated. The purpose of the charge pump 400 is to generate negative voltages lower than the IC ground voltage GND. More particularly, the charge pump 400 includes a cascade of stages, in the example herein considered three stages. For example, the charge pump 400 is integrated in an IC, such as a semiconductor memory IC, and is adapted to generate a negative voltage used, for example, to erase memory cells. It has to be noted that the charge pump herein described is an exemplary one, in the sense that the number of stages (and thus the number of capacitors) is merely indicative. Indeed, the teachings of the present invention may be referred also to a negative charge pump having a different number of capacitors (and thus, having different voltage values at the output node).

The generic stage includes a capacitor, like the three capacitors C'1, C'2, C'3. The three capacitors are series connected by means of two switches S'1, S'2.

The charge pump 400 also includes a plurality of forcing circuits 410, 420, 430, 440, 450, 460 adapted to force voltages on a plurality of nodes N'1, N'2, N'3, N'4, N'5, N'6 of the charge pump in such a way to properly charge the capacitors C'1, C'2 and C'3, and a logic block 490, adapted to generate control signals whose purpose will be explained in the following of the description.

More particularly, the capacitor C'1 includes a first plate (in correspondence of the node N'1) connected to an output terminal of the forcing circuit 410, and a second plate (in correspondence of the node N'2) that is connected to a first terminal of the switch S'1. Moreover, the node N'2 is further connected to an output terminal of the forcing circuit 420.

The switch S'1 includes an NMOS transistor having a first terminal forming the first terminal of the switch, a control terminal (the gate terminal) connected to a first output terminal of the logic block 400 (node M1), a bulk terminal connected to the node N'2, and a second terminal forming the second terminal of the switch S'1, connected to the first plate of the capacitor C'2 (in correspondence of the node N'3). Moreover, the node N'3 is connected to an output terminal of the forcing circuit 430.

The capacitor C'2 has a second plate connected to a first terminal of the switch S'2 (in correspondence of the node N'4). The node N'4 is further connected to an output node of the forcing circuit 440.

The switch S'2 includes an N-channel MOS transistor having a control terminal (the gate terminal) connected to the node N'2, a bulk terminal connected to the node N'4, a first terminal, forming the first terminal of the switch, and a second terminal forming a second terminal of the switch S'2, connected to a first plate of the capacitor C'3 (in correspondence of the node N'5). Moreover, the node N'5 is further connected to an output terminal of the forcing circuit 450.

The capacitor C'3 has a second plate connected to an output terminal of the forcing circuit 460, in correspondence of the node N'6. The node N'6, forming the output node of the charge pump, is further connected to a load, schematized as a bipole L'. For example, the load may be a part of the IC wherein the charge pump is integrated that needs to use the negative voltage generated by the charge pump.

The logic block 490 further includes a second output terminal connected to input terminals of the forcing circuits 420, 430, 440, 450 and 460 (node M2), a third output terminal connected to an input terminal of the forcing circuit 420 (node M3), a fourth output terminal connected to input terminals of the forcing circuits 410, 420, 430, 440 and 460 (node M4), and a fifth output terminal connected to an input terminal of the forcing circuit 440.

The forcing circuit 440 has a further input terminal connected to the node N'2; the forcing circuit 450 has two further input terminals connected, respectively, to the node M1 and N'2; the forcing circuit 460 has four further input terminals connected, respectively, to the nodes N'3, M1, N'2 and N'4.

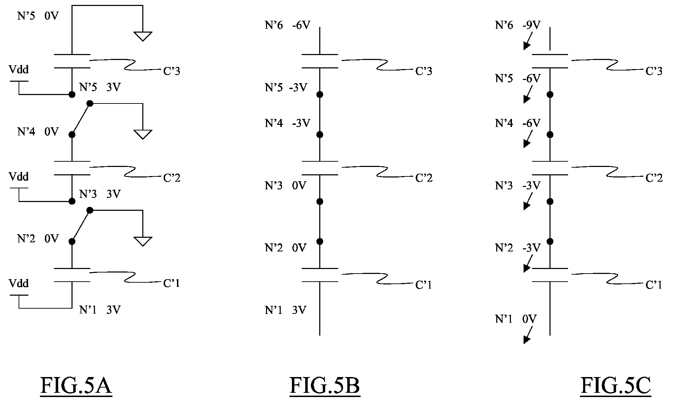

To better explain the operation of the charge pump 400, reference will be made now to the Figures 5A, 5B and 5C, illustrating simplified equivalent circuits of the charge pump 400 during three different operating phases: a precharging phase (Figure 5A), a charge-sharing phase (Figure 5B), and a voltage boosting phase (Figure 5C). More particularly, in the charge pump operation, these three phases are repeatedly performed.

The first, precharging phase serves to charge each one of the capacitors C'1, C'2 and C'3 to the supply voltage Vdd of the IC (in this example equal to 3 Volts). In particular, during this phase, the switches S'1 and S'2 are open, and each capacitor C'1, C'2 and C'3 is thus isolated from the other two. The forcing circuits act on the corresponding nodes, so as to bias the first plates of the capacitors to voltages equal to the supply voltage Vdd, and to bias the second plates of the capacitors to voltages equal to the ground voltage GND. Consequently, the forcing circuit 410 biases the node N'1 to the supply voltage Vdd, in the example of 3 Volts; the forcing circuit 420 biases the node N'2 to the ground voltage GND; the forcing circuit 430 biases the node N'3 to a voltage of 3 Volts; the forcing circuit 440 biases the node N'4 to the ground voltage GND; the forcing circuit 450 biases the node N5 to a voltage of 3 Volts; and the forcing circuit 460 biases the node N6 to the ground voltage GND.

After the precharging phase, each capacitor C'1, C'2, C'3 stores an electrical charge that depends on the respective capacitance value, and on the voltage difference applied across its plates. For example, assuming that all the capacitors C'1, C'2 and C'3 have the same capacitance value, since in the precharging phase a voltage difference equal to the supply voltage is applied across the plates of each one of the capacitors C'1, C'2, C'3 thanks to the series connection of all the capacitors guaranteed by the particular topology of the charge pump, each capacitor stores essentially an equal amount of electrical charge.

In the second, charge-sharing operating phase, the switches S'1 and S'2 are made to closed, so as to connect in series the capacitors C'1, C'2, C'3. Thanks to the series connection, the electrical charge previously stored in each capacitor C'1, C'2, C'3 is shared with the charge stored in the adjacent capacitor. Moreover, the forcing circuits associated with the nodes that modify their voltage values during this phase are disconnected from the corresponding nodes.

Consequently, the stored electrical charge is redistributed along the series connection. This involves a change of the voltages present at each node of the pump 400. More particularly, while the node N'1 remains at 3 Volts and the node N'2 remains at the ground voltage GND, the voltage at node N'3 becomes equal to the ground voltage GND, the voltage at node N'4 becomes equal to -3 Volts, the voltage at node N'5 becomes equal to -3 Volts, and the voltage at node N'6 becomes equal to -6 Volts.

In the third, boosting phase, the switches S'1 and S'2 remain closed as in the previous phase, and the forcing circuit 410 brings the node N'1 from a voltage of 3 Volts to the ground voltage GND. Since all the nodes are connected by means of a capacitive serial connection, the voltage at each node N'2, N'3, N'4, N'5, N'6 is consequently decremented by 3 Volts: the voltage at node N'2 (now short-circuited to the node N'3) becomes equal to -3 Volts, the voltage at node N'4 (short-circuited to the node N'5) becomes equal to -6 Volts, and the voltage at node N'6 becomes equal to -9 Volts.

As previously discussed, the precharging phase, the charge-sharing phase, and the boosting phase are repeatedly performed in succession. In this way, the output voltage provided to the load L' (i.e., the voltage of the node N'6) oscillates among the values of 0 Volts (precharging phase), -6 Volts (charge-sharing phase) and -9 Volts (boosting phase). The unavoidable draining of electrical charge by the load L' from the one stored in the series connection of the capacitors C'1, C'2 and C'3 is counterbalanced during the boosting phase by the forcing circuit 410, that continuously re-supplies the electrical charge to the series connection of the capacitors.

In practical implementations, the load L' is usually connected to the node N'6 of the charge pump 400 by means of a voltage regulator (not shown in the Figure), that allows reducing the voltage swings on the node N'6, in such a way to obtain an output voltage that is as stable as possible.

Referring back to the Figures 4, 5A, 5B, 5C, the voltage values taken by each node of the charge pump 400 are shown for each one of the three phases.

The detailed structure of the forcing circuits 410, 420, 430, 440, 450, 460 according to a possible embodiment of the present invention will be now presented.

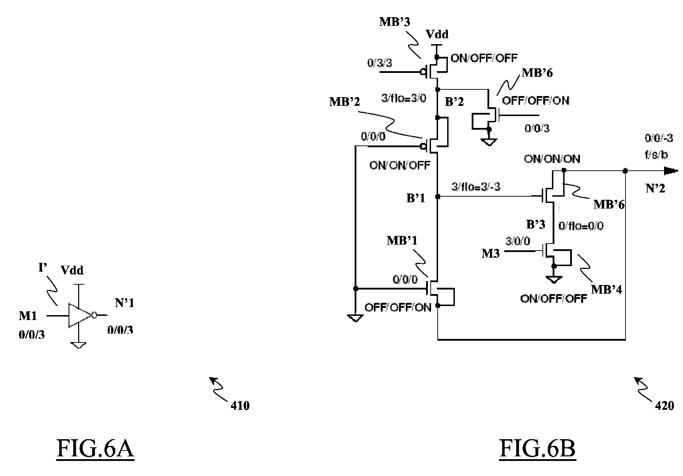

Referring to Figure 6A, the forcing circuit 410 includes a logic inverter I' (e.g., a CMOS inverter) that receives as voltage supplies the supply voltage Vdd and the ground voltage GND. The inverter I includes an input terminal connected to an output node (node M4) of the logic block 490, and an output terminal connected to the node N'1.

During the precharging and the charge-sharing phases, an input signal provided by logic block 490 to the inverter I' takes a voltage equal to the ground voltage GND, thereby an inverter output signal takes a voltage value of 3 Volts. During the boosting phase, the input signal provided by the logic block 490 takes a voltage value equal to 3 Volts. Consequently, the output signal takes the ground voltage GND.

It can be appreciated that in this way the node N'1 takes the voltage values described previously and shown in Figures 5A, 5B, and 5C.

Referring to figure 6B, the forcing circuit 420 includes a NMOS transistor MB'1, having a first terminal connected to the node N'1, a gate terminal connected to a terminal providing the ground voltage GND, a bulk terminal connected to the node N'2, and a second terminal connected to a first terminal of a PMOS transistor MB'2, forming a circuit node B'1. The PMOS transistor MB'2 further includes a gate terminal connected to a terminal providing the ground voltage GND, a second terminal connected to the first terminal of a PMOS transistor MB'3, forming a circuit node B'2, and a bulk terminal connected to the node B'2. The PMOS transistor MB'3 further includes a gate terminal connected to the node M2, a second terminal connected to a terminal providing the supply voltage Vdd, and a bulk terminal connected to the second terminal. The forcing circuit 420 further includes a NMOS transistor MB'6 having a first terminal connected to a terminal providing the ground voltage GND, a gate terminal connected to the node M4, a second terminal connected to the node B'2, and a bulk terminal connected to the first terminal. The forcing circuit 420 still further includes a NMOS transistor MB'5 having a gate terminal connected to the node B'1, a first terminal connected to a second terminal of a NMOS transistor MB'4, forming a circuit node B'3, a second terminal connected to the node N'2, and a bulk terminal connected to the second terminal. The NMOS transistor MB'4 further includes a first terminal connected to a terminal providing the ground voltage GND, a gate terminal connected to the node M3, and a bulk terminal connected to the first terminal.

During the precharging phase, the logic block 490 provides the ground voltage GND to the gate terminal of the PMOS transistor MB'3, activating it, and to the gate terminal of the NMOS transistor MB'6, turning it off. Consequently, the node B'2 takes a voltage of 3Volts. Since the gate terminal of the PMOS transistor MB'2 is at the ground voltage GND, the latter transistor is turned on, and the node B'1 is brought to a voltage of 3 Volts too. Moreover, the logic block 490 provides a voltage of 3 Volts to the gate terminal of the NMOS transistor MB'4, activating it. In this way, both the NMOS transistors MB'5 and MB'4 are turned on, and the voltage of the node N'2 is pulled to the ground voltage GND, as requested by the correct functioning of the charge pump 400. The NMOS transistor MB'1 remains turned off during all the precharging phase.

During the charge-sharing phase, the node N'2 remains at the ground voltage GND. The logic block 490 provides a voltage of 3 Volts to the gate terminal of the NMOS transistor MB'3, turning it off. Consequently, the node B'1 becomes floating, keeping a voltage of 3 Volts. Moreover, the logic block 490 provides the ground voltage GND to the gate terminals of the NMOS transistors MB'4 and MB'6, turning them off.

During the boosting phase, the node N'2 is brought to a voltage of -3 Volts, capable to turn the NMOS transistor MB'1 on (its gate terminal is at the ground voltage GND), pulling the voltage of the node B'1 to -3 Volts. The logic block 490 provides a voltage of 3 Volts to the gate terminal of the NMOS transistor MB'6, activating it. Moreover, MB'2 is turned off, because its gate terminal is at the ground voltage GND, its first terminal (node B'1) is at a voltage of 3 Volts, and its second terminal (node B'2) is pulled to the ground voltage by the NMOS transistor MB'6. The logic block 490 provides a voltage of 3 Volts to the gate terminal of the PMOS transistor MB'3 and the ground voltage GND to the gate terminal of the NMOS transistor MB'4, keeping the two transistors turned off during all the boosting phase.

As can be seen, even in this case, the voltage values taken by each node of the forcing circuit 420 during each one of the three operating phases are such to allow the use of LV transistors. In fact, in each transistor, the voltage differences across its terminals are at most equal to 3 Volts.

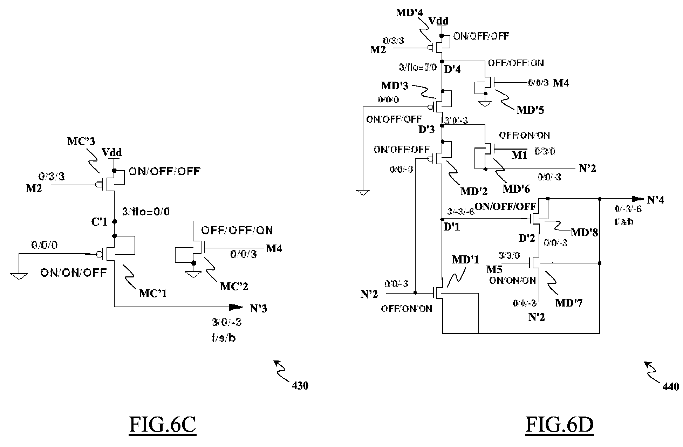

Referring to figure 6C, the forcing circuit 430 includes a PMOS transistor MC'1 having a first terminal connected to the node N'3, a gate terminal connected to a terminal providing the ground voltage GND, a second terminal connected to a first terminal of a NMOS transistor MC'2, forming a circuit node C'1, and a bulk terminal connected to the node C'1. The NMOS transistor MC'2 further includes a first terminal connected to a terminal providing the ground voltage GND, a gate terminal connected to the node M4, and a bulk terminal connected to the first terminal. The forcing circuit 430 further includes a gate terminal connected to the node M2, a second terminal connected to a terminal providing the supply voltage Vdd, and a bulk terminal connected to the second terminal.

During the precharging phase, the logic block 490 provides the ground voltage GND to the gate terminal of the PMOS transistor MC'3 and to the gate terminal of the NMOS transistor MC'2. Consequently, while the NMOS transistor MC'2 is turned off, the PMOS transistor MC'3 is activated, and the node C'1 is brought to a voltage of 3 Volts. in this way, the PMOS transistor MC'1 is on, having the gate terminal at the ground voltage GND, and the node N'3 is brought to a voltage of 3 Volts, as requested by the correct functioning of the charge pump 400.

During the charge-sharing phase, the logic block 490 provides a voltage of 3 volts to the gate terminal of the PMOS transistor MC'3, turning it off, and provides the ground voltage GND to the gate terminal of the NMOS transistor MC'2, keeping it turned off. In this way, the node C'1 becomes floating, and takes a voltage of 1 Volt, i.e., the voltage at the gate terminal of the transistor MC'1 plus the threshold voltage.

During the boosting phase, the node N'3 takes a voltage value equal to -3 Volts, turning off the PMOS transistor MC'1. Meanwhile, the logic block 490 provides a voltage of 3 Volts to the gate of the transistor MC'2, turning it on. Consequently, the node C'1 is brought to the ground voltage GND. Moreover, the logic block 490 provides a voltage of 3 Volts to the gate terminal of the PMOS transistor MC'3, keeping it turned off.

Even in this case, the voltage values taken by each node of the forcing circuit 430 during each one of the three operating phases are such to allow the use of LV transistors. In fact, in each transistor, the voltage differences across its terminals are at most equal to 3 Volts.

Referring now to Figure 6D, the forcing circuit 440 includes a NMOS transistor MD'1 having a first terminal connected to the node N'4, a gate terminal connected to the node N'2, a second terminal connected to the gate terminal of a NMOS transistor MD'8, forming a circuit node D'1, and a bulk terminal connected to the node N'4. The NMOS transistor MD'8 further includes a first terminal connected to a second terminal of a NMOS transistor MD'7, forming a circuit node D'2, second terminal connected to the node N'4, and a bulk terminal connected to the second terminal. The NMOS transistor MD'7 further includes a first terminal connected to the node N'2, a gate terminal connected to the node M5, and a bulk terminal connected to the node N'4. The forcing circuit 440 further includes a PMOS transistor MD'2 having a first terminal connected to the node D'1, a gate terminal connected to the node N'2, a second terminal connected to a first terminal of a PMOS transistor MD'3, forming a circuit node D'3, and a bulk terminal connected to the node D'3. The PMOS transistor MD'3 further includes a gate terminal connected to a terminal providing the ground voltage GND, a second terminal connected to a first terminal of a PMOS transistor MD'4, forming a circuit node D'4, and a bulk terminal connected to the node D'4. The PMOS transistor MD'4 further includes a gate terminal connected to the node M2, a second terminal connected to a terminal providing the supply voltage Vdd, and a bulk terminal connected to the second terminal. The forcing circuit 440 further includes a NMOS transistor MD'6 having a first terminal connected to the node N'2, a gate terminal connected to the node M1, a second terminal connected to the node D'3, and a bulk terminal connected to the node N'2. Moreover, a further NMOS transistor MD'5 is included, having a first terminal connected to a terminal providing the ground voltage, a gate terminal connected to the node M4, a second terminal connected to the node D'4 and a bulk terminal connected to the first terminal.

During the precharging phase, the node N'4 is pulled to the ground voltage GND by turning on the NMOS transistors MD'8 and MD'7. For this purpose, the logic block 490 provides a voltage of 3 Volts to the gate of the NMOS transistor MD'7, that has the first terminal at the ground voltage GND, and the node D'1 is driven to a voltage of 3 Volts by means of the activation of the PMOS transistors MD'2, MD'3 and MD'4. More particularly, the logic block 490 provides the ground voltage GND to the gate terminal of the PMOS transistor MD'4, turning it on. Consequently, the node D'4 takes a voltage of 3 Volts. In this way, the PMOS transistor MD'3 is turned on, because its gate terminal is at the ground voltage, and also the node D'3 takes a voltage of 3 Volts. Since in the precharging phase the node N'2 is brought to the ground voltage GND, and since the PMOS transistor MD'2 has the gate terminal connected to the node N'2, the latter transistor turns on, providing a voltage of 3 Volts to the node D'1. The transistors MD'1, MD'5 and MD'6 remain turned off during all the precharging phase.

During the charge-sharing phase, the node N'4 takes a voltage value equal to -3 Volts, turning on the NMOS transistor MD'1, which has the gate terminal at the ground voltage GND. In this way, the node D'1 takes the voltage value of the node N'4, (-3Volts), turning off the PMOS transistor MD'2. The logic block 490 provides a voltage of 3 Volts to the gat terminal of the NMOS transistor MD'6, turning it on. In this way, the node D'3 is brought to the ground voltage GND, turning off the PMOS transistor MD'3. Moreover, the PMOS transistor MD'4 is turned off by the logic block 490, that provides a voltage of 3 Volts to its gate terminal. Since the node D'1 is at a voltage of-3 Volts, the NMOS transistor MD'8 is turned off. Moreover, the logic block 490 provides a voltage of 3 Volts to the NMOS transistor MD'7, keeping it turned on. Furthermore, the NMOS transistor MD'5 is kept turned off during all the charge-sharing phase, being its gate terminal at the ground voltage GND.

During the boosting phase, the node N'4 is brought to a voltage equal to -6 Volts. The NMOS transistor MD'1 remains turned on (its gate terminal is brought to a voltage of -3 Volts). Consequently, the node D'1 takes a voltage value of -6 Volts, keeping the NMOS transistor MD'8 turned off. In fact, its first terminal is brought to -3 Volts by the NMOS transistor MD'7, activated in turn by the logic block 490, that provides the ground voltage GND to the gate terminal of the latter transistor. Moreover, the PMOS transistor MD'2 remains turned off, because its gate terminal, connected to the node N'2, is at a voltage of-3 Volts, while the node D'3 is brought to a voltage of-3 Volts by the NMOS transistor MD'6. In fact, the logic block 490 provides the ground voltage GND to the gate terminal of the latter transistor, having the first terminal at a voltage of -3 Volts during all the boosting phase. Being the node D'3 at a voltage of -3Volts, the PMOS transistor MD'3 remains turned off. Moreover, the logic block 409 provides a voltage of 3 Volts to the gate terminal of the NMOS transistor MD'5, that in turn pulls the node D'4 to the ground voltage GND. The PMOS transistor MD'4 remains turned off also during the boosting phase.

Even in this case, the voltage values taken by each node of the forcing circuit 440 during each one of the three operating phases are such to allow the use of LV transistors. In fact, in each transistor, the voltage differences across its terminals are at most equal to 3 Volts.

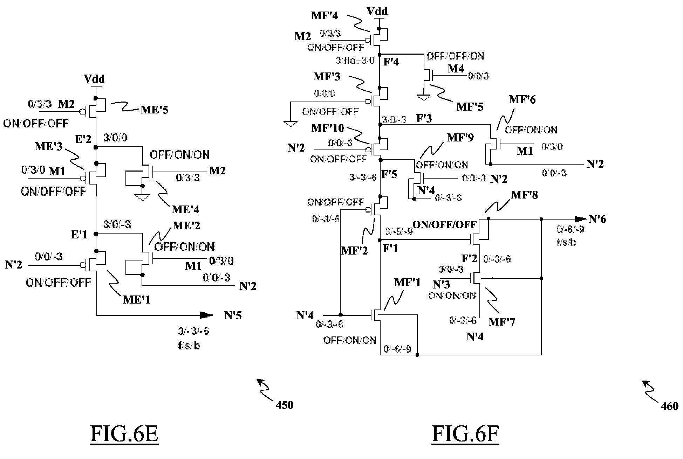

Referring to Figure 6E, the forcing circuit 450 includes a PMOS transistor ME'1 having a first terminal connected to the node N'5, a gate terminal connected to the node N'2, a second terminal connected to a first terminal of a PMOS transistor ME'3, forming a circuit node E'1, and a bulk terminal connected to the node E'1. The PMOS transistor ME'3 further includes a gate terminal connected to the node M1, a second terminal connected to a first terminal of a PMOS transistor ME'5, forming a circuit node E'2, and a bulk terminal connected to the node E'2. The PMOS transistor ME'5 further includes a gat terminal connected to the node M2, a second terminal connected to a terminal providing the supply voltage Vdd, and a bulk terminal connected to the second terminal. The forcing circuit 450 further includes a NMOS transistor ME'2 having a first terminal connected to the node N'2, a gate terminal connected to the node M1, a second terminal connected to the node E'1, and a bulk terminal connected to the first terminal. Moreover, the forcing circuit 450 still further includes a NMOS transistor ME'4 having a first terminal connected to a terminal providing the ground voltage GND, a gate terminal connected to the node M2, a second terminal connected to the node E'2, and a bulk terminal connected to the first terminal.

During the precharging phase, the logic block 490 provides the ground voltage GND to the gate terminals of the PMOS transistors ME'5, ME'3 and ME'1. Consequently, while the NMOS transistor ME'4 is turned off (its gate terminal is driven by the logic block 490 in such a way to take the ground voltage GND), the PMOS transistor ME'5 is activated, and the node E'2 is brought to a voltage of 3 Volts. In this way, the PMOS transistor ME'3 is activated, having the gate terminal at the ground voltage GND, and the node E'1 is brought to a voltage of 3 Volts. As a consequence, the PMOS transistor is turned on, and the node N'5 is brought to a voltage of 3 Volts, as requested by the correct functioning of the charge pump 400. The logic block 490 provides the ground voltage to the gate terminal of the NMOS transistor ME'2, that, having the first terminal at the ground voltage too, remains turned off during all the precharging phase.

During the charge-sharing phase, the node N'5 takes a voltage value equal to -3 Volts. This voltage value is such to turn off the PMOS transistor ME'1, which has the gate terminal at the ground voltage GND. The NMOS transistor ME'2 is turned on, because, while its first terminal is brought to the ground voltage GND, the logic block 490 provides to its gate terminal a voltage of 3 Volts. Consequently, the node E'1 takes the ground voltage GND, turning off the PMOS transistor ME'3 (its gate terminal is driven by the logic block 490 to a voltage of 3 Volts). Moreover, the node E'2 is brought to the ground voltage GND by the NMOS transistor ME'4, that is turned on by the logic block 490 (its gate terminal is brought to a voltage of 3 Volts). The PMOS transistor ME'5, having the gate terminal at a voltage of 3 Volts, remains turned off during all the charge-sharing phase.

During the boosting phase, the node N'5 takes a voltage value of-6 Volts. The logic block 490 provides a voltage of-3 Volts to the gate terminal of the PMOS transistor ME'1, keeping it turned off. The NMOS transistor ME'2 is kept turned on (its gate terminal is driven to the ground voltage GND, and its first terminal is at a voltage of -3 Volts), driving thus the voltage of the node E'1 to the voltage of the node N'2, i.e. to -3 Volts. Moreover, the node E'2 is kept at the ground voltage GND by the NMOS transistor ME'4, which has its gate terminal at a voltage of 3 Volts, and the PMOS transistors ME'3 and ME'5 are kept turned off. In fact, the logic block 490 provides the ground voltage GND to the gate terminal of the PMOS transistor ME'3, and a voltage of 3 Volts to the gate terminal of the PMOS transistor ME'5.

Even in this case, the voltage values taken by each node of the forcing circuit 450 during each one of the three operating phases are such to allow the use of LV transistors. In fact, in each transistor, the voltage differences across its terminals are at most equal to 3 Volts.

Referring to Figure 6F, the forcing circuit 460 includes a NMOS transistor MF'1 having a first terminal connected to the node N'6, a gate terminal connected to the node N'4, a second terminal connected to the gate terminal of a NMOS transistor MF'8, forming a circuit node F'1, and a bulk terminal connected to the node N'6. The NMOS transistor MF'8 further includes a first terminal connected to a second terminal of a NMOS transistor MF'7, forming a circuit node F'2, a second terminal connected to the node N'6, and a bulk terminal connected to the second terminal. The NMOS transistor MF'7 further includes a first terminal connected to the node N'4, a gate terminal connected to the node N'3, and a bulk terminal connected to the node N'6. The forcing circuit 460 further includes a PMOS transistor MF'2 having a first terminal connected to the node F'1, a gate terminal connected to the node N'4, a second terminal connected to a first terminal of a PMOS transistor MF'10, forming a circuit node F'5, and a bulk terminal connected to the node F'5. The PMOS transistor MF'10 further includes a gate terminal connected to the node N'2, a second terminal connected to a first terminal of a PMOS transistor MF'3, forming a circuit node F'3, and a bulk terminal connected to the node F'3. The PMOS transistor MF'3 further includes a gate terminal connected to a terminal providing the ground voltage GND, a second terminal connected to a first terminal of a PMOS transistor MF'4, forming a circuit node F'4, and a bulk terminal connected to the node F'4. The PMOS transistor MF'4 further includes a gate terminal connected to the node M2, a second terminal connected to a terminal providing the supply voltage Vdd, and a bulk terminal connected to the second terminal. The forcing circuit 460 further includes a NMOS transistor MF'9 having a first terminal connected to the node N'4, a gate terminal connected to the node N'2, a second terminal connected to the node F'5, and a bulk terminal connected to the first terminal. Moreover, the forcing circuit 460 still further includes a NMOS transistor MF'6 having a first terminal connected to the node N'2, a gate terminal connected to the node M1, a second terminal connected to the node F'3, and a bulk terminal connected to the node N'2. Furthermore, the forcing circuit 460 includes a NMOS transistor MF'5, having a first terminal connected to a terminal providing the ground voltage, a gate terminal connected to the node M4, and a second terminal connected to the node F'4.

During the precharging phase, the node N'6 is pulled to the ground voltage GND by turning on the NMOS transistors MF'8 and MF'7. For this purpose, the logic block 490 provides a voltage of 3 Volts to the gate of the NMOS transistor MD'7, that has the first terminal at the ground voltage GND, and the node F'1 is driven to a voltage of 3 Volts by means of the activation of the PMOS transistors MF'2, MF'10, MF'3 and MF'4. More particularly, the logic block 490 provides the ground voltage GND to the gate terminal of the PMOS transistor MF'4, turning it on. Consequently, the node F'4 takes a voltage of 3 Volts. In this way, the PMOS transistor MF'3 is turned on, because its gate terminal is at the ground voltage, and also the node F'3 takes a voltage of 3 Volts. Since in the precharging phase the node N'2 is brought to the ground voltage GND, and since the PMOS transistor MF'10 has the gate terminal connected to the node N'2, the latter transistor turns on, providing a voltage of 3 Volts to the node F'5. In the same way, since in the precharging phase the node N'4 is brought to the ground voltage GND, and since the PMOS transistor MF'2 has the gate terminal connected to the node N'4, the latter transistor turns on, providing a voltage of 3 Volts to the node F'1. The transistors MF'1, MF'9, MF'5 and MF'6 remain turned off during all the precharging phase.

During the charge-sharing phase, the node N'6 takes a voltage value equal to -6 Volts, turning on the NMOS transistor MF'1, which has the gate terminal at a voltage of -3 Volts. In this way, the node F'1 takes the voltage value of the node N'6, (-6Volts), turning off the PMOS transistor MF'2 (its gate terminal is at a voltage of -3 Volts). The logic block 490 provides the ground voltage GND to the gate terminal of the NMOS transistor MF'9, turning it on. In this way, the node F'5 is brought to a voltage of -3 Volts. The logic block 490 provides a voltage of 3 Volts to the gate terminal of the NMOS transistor MF'6, turning it on (its first terminal is at the ground voltage GND). In this way, the node F'3 is brought to the ground voltage GND. Since its gate terminal is kept at the ground voltage GND, the PMOS transistor MF'10 is turned off. Moreover, the PMOS transistor MF'4 is turned off by the logic block 490, that provides a voltage of 3 Volts to its gate terminal. Consequently, the node F'4 becomes floating. The PMOS transistor MF'3, having the gate terminal at the ground voltage GND, is turned off. Since the node F'1 is at a voltage of -6 Volts, the NMOS transistor MD'8 is turned off. Moreover, the logic block 490 provides the ground voltage GND to the gate terminal of the NMOS transistor MD'7, keeping it turned on, being its first terminal at a voltage of-3 Volts. Furthermore, the NMOS transistor MF'5 is kept turned off during all the charge-sharing phase, being its gate terminal at the ground voltage GND.

During the boosting phase, the node N'6 takes a voltage value of -9 Volts. The NMOS transistor MF'1 remains turned on (its gate terminal is brought to a voltage of -6 Volts). Consequently, the node F'1 takes a voltage value of -9 Volts, keeping the NMOS transistor MF'8 turned off. In fact, its first terminal is brought to -6 Volts by the NMOS transistor MF'7, having in turn the gate terminal at a voltage of -3 Volts and the first terminal at a voltage of -6 Volts. Moreover, the PMOS transistor MF'2 remains turned off, because its gate terminal, connected to the node N'4, is at a voltage of -6 Volts, while the node F'5 is brought to a voltage of -6 Volts by the NMOS transistor MF'9 (having the gate terminal at a voltage of -3 Volts and the first terminal at a voltage of -6 Volts). Moreover, the node F'3 is brought to a voltage of -3 Volts by the NMOS transistor MF'6. In fact, the logic block 490 provides the ground voltage GND to the gate terminal of the latter transistor, having the first terminal at a voltage of -3 Volts during all the boosting phase. Being the node D'3 at a voltage of -3Volts, the PMOS transistors MF'3 and MF'10 remains turned off. Moreover, the logic block 490 provides a voltage of 3 Volts to the gate terminal of the NMOS transistor MF'5, that in turn pulls the node F'4 to the ground voltage GND. The PMOS transistor MF'4 remains turned off also during the boosting phase.

Even in this case, the voltage values taken by each node of the forcing circuit 460 during each one of the three operating phases are such to allow the use of LV transistors. In fact, in each transistor, the voltage differences across its terminals are at most equal to 3 Volts.

Referring back to the Figure 4, and recalling that the switches S'1, S'2 are to be controlled in such a way to be open (i.e., not conductive) during the precharging phase, and closed (i.e., conductive) during the charge-sharing and the boosting phases, the logic block 490 is capable to provide to the gate terminal of the NMOS transistor of the switch S'1 (node M1) the ground voltage GND during the precharging phase (node N'2 at the ground voltage GND, S'1 open), a voltage of 3 Volts during the charge-sharing phase (node N'2 at the ground voltage GND, S'1 closed), and the ground voltage GND during the boosting phase (node N'2 at a voltage of -3 Volts, S'1 closed). Moreover, since the gate terminal of the NMOS transistor of the switch S'2 is connected to the node N'2, it takes a the ground voltage GND during both the precharging and the charge-sharing phases, and takes a voltage equal to -3 Volts during the boosting phase. Consequently, in each one of the two switches S1 and S2, the voltage differences across its terminals are at the limit of 3 Volts, and thus the NMOS transistors therein included may be of the LV transistors type.

The exemplary circuital structures described herein allow to realize both positive and negative charge pumps avoiding the necessity of using HV circuit components. In particular, the adoption of the serial charge pump architecture intrinsically allows avoiding the use of HV capacitors, because every capacitor is subjected to a voltage difference at most equal to the supply voltage Vdd. Moreover, the innovative biasing of the various forcing circuits allows avoiding the use of HV transistors. This in turn allows reducing the silicon area occupied by the ICs including high voltage circuits, and to simplify their manufacturing.

Naturally, in order to satisfy local and specific requirements, a person skilled in the art may apply to the solution described above many modifications and alterations. Particularly, although the present invention has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the invention may be incorporated in any other embodiment as a general matter of design choice.

## Claims

1. A charge pump circuit (100, 400) comprising at least one pump stage, said pump stage including:
a capacitor (C1, C2, C3; C'1, C'2, C'3) having a first plate and a second plate;
a first circuital node (N1, N3, N5; N'2, N'4, N'6) connected to the first plate, a voltage of the first circuital node being forced to a first forced voltage (GND) during a forcing phase of the charge pump operation;
a second circuital node (N2, N4, N6; N'1, N'3, N'5) connected to the second plate, a voltage of the second circuital node being forced to a second forced voltage (Vdd) during the forcing phase, the voltages of the first and the second circuital nodes being free of changing with respect to the first and to the second forced voltages, respectively, except during said forcing phase,;
a first forcing circuit (110, 130, 150; 420, 440, 460) associated to the first circuital node, the first forcing circuit being activable for forcing the voltage of the first circuital node to the first forced voltage during the forcing phase; and
a second forcing circuit (120, 140, 160; 410, 430, 450) associated to the second circuital node, the second forcing circuit being activable for forcing the voltage of the second circuital node to the second forced voltage during the forcing phase,
wherein the first and second forcing circuits comprise each at least one electronic device having terminals,
**characterized in that**:
said at least one electronic device is designed to guarantee the capability of sustaining voltage differences across the terminals thereof that are up-limited in absolute value by a predetermined maximum voltage equal to a multiple of the absolute value of the difference between the first and the second forcing voltages and lower than an absolute value of a charge pump output voltage; and
the first and second forcing circuits include means for ensuring that the voltage difference applied across pair of terminals of said at least one electronic device is not higher than the predetermined maximum voltage when at least one among the voltages of the first and the second circuital nodes change to a voltage higher in absolute value than said predetermined maximum voltage.

2. The charge pump circuit (100, 400) of claim 1, wherein at least one among said first and second forcing circuits comprises:
a switch (MB4, MC7, MD5, ME6, MF5; MB'5, MD'8, MF'8) inserted between the respective circuital node and a forcing voltage supplier terminal, the switch including a control terminal, a first terminal connected to the respective circuital node and a second terminal connected to the forcing voltage supplier terminal;
a switch activation circuit (MB1, MB2; MC6; MD1, MD2, MD3; ME5; MF1, MF2, MF3, MF4; MB'2, MB'3, MB'6; MD'2, MD'3, MD'4, MD'5, MD'6; MF'2, MF'3, MF'4, MF'5, MF'6, MF'9, MF'10) connected to the control terminal of the switch, adapted to activate the switch during the forcing phase in such a way to transfer the first, respectively second forced voltage to the first, respectively second circuital node; and
a bootstrap circuit (MB3; MC1, MC2, MC3, MC4; MD4; ME1, ME2, ME3, ME4; MF6; MB'1; MD'1; MF'1) coupled to the respective circuital node and the control terminal of the switch, the bootstrap circuit being connected between the first, respectively second circuital node and the control terminal of the switch and being adapted to ensure that a voltage difference across the control, the first and the second terminals of the switch and between the switch control terminal and the switch activation circuit when the voltage of the first, respectively second circuital node changes with respect to the first, respectively second forced voltage is not higher in absolute value than the predetermined maximum voltage.

3. The charge pump (100, 400) of claim 2, wherein the bootstrap circuit (MC1, MC2, MC3, MC4; ME1, ME2, ME3, ME4; MB'1, MD'1; MF'1) of the first forcing circuit includes first coupling means (MC1, MC2, MC3, MC4; ME1, ME2, ME3, ME4; MB'1, MD'1; MF'1) for coupling the voltage of the first circuital node to the control terminal of the switch, and the bootstrap circuit (MB3; MD4; MF6) of the second forcing circuit includes second coupling means (MB3; MD4; MF6) for coupling the voltage of the second circuital node to the control terminal of the switch.

4. The charge pump (100, 400) of claim 3, wherein the first coupling means (MC1, MC2, MC3, MC4; ME1, ME2, ME3, ME4; MB'1, MD'1; MF'1) includes at least one first controlled voltage transfer mean having a control terminal adapted to be driven by voltages higher than the higher between the first and second forcing voltages or lower than the lower between the first and second reference forcing voltages for ensuring that a voltage difference between the control terminal of the at least one first controlled voltage transfer mean, the first circuital node, and the switch control terminal is not higher in absolute value than the predetermined maximum voltage.

5. The charge pump (100) of any one claim from 2 to 4, wherein both the first and the second forcing circuits comprise the switch (MB4, MC7, MD5, ME6, MF5), the switch activation circuit (MB1, MB2; MC6; MD1, MD2, MD3; ME5; MF1, MF2, MF3, MF4), and the bootstrap circuit (MB3; MC1, MC2, MC3, MC4; MD4; ME1, ME2, ME3, ME4; MF6).

6. The charge pump (100) of claim 5, wherein the second coupling means (MB3; MD4; MF6) include at least one second controlled voltage transfer mean having a control terminal adapted to be driven by voltages higher than the higher between the first and second forcing voltage for ensuring that a voltage difference between the control terminal of the at least one second controlled voltage transfer mean, the second circuital node, and the switch control terminal is not higher in absolute value than the predetermined maximum voltage.

7. The charge pump (100) of claim 6, wherein the at least one among the first (110, 130, 150) and second (120, 140, 160) forcing circuits includes a voltage supplier circuit (MC5; ME8, ME7), coupled to the forcing voltage supplier terminal, capable to provide the first or, respectively, the second forced voltage for forcing the first, respectively second circuital node.

8. The charge pump (100) of claim 7, wherein the voltage supplier circuit (MC5; ME8, ME7) of the first forcing circuit is capable to interrupt the supply of the first forced voltage to the first circuital node during at least a phase different from the forcing phase; and
the bootstrap circuit (MB3; MD4; MF6) of the second forcing circuit is capable to deactivate the switch during at least a phase different from the forcing phase.

9. The chare pump (400) of any one claim from 2 to 4, wherein:
the first forcing circuit (410, 430, 450) comprises the switch (MB'5; MD'8; MF'8), the switch activation circuit (MB'2, MB'3, MB'6; MD'2, MD'3, MD'4, MD'5, MD'6; MF'2, MF'3, MF'4, MF'5, MF'6, MF'9, MF'10), and the bootstrap circuit (MB'1; MD'1; MF'1); and
the second forcing circuit (420, 440, 460) is capable to interrupt the supply of the second forced voltage to the second circuital node during at least a phase different from the forcing phase.

10. The charge pump (400) of claim 9, wherein the first forcing circuit (410, 430, 450) includes a voltage supplier circuit (MB'4; MD'7; MF'7) coupled to the forcing voltage supplier terminal, capable to provide the first forced voltage for forcing the first circuital node, said voltage supplier circuit being capable to interrupt the supply of the first forced voltage to the first circuital node during at least a phase different from the forcing phase.

11. The charge pump (100, 400) of any one of the preceding claims, wherein said at least one pump stage includes at least a first and a second pump stages cascade connected by means of switching means (S1, S2; S'1, S'2), the second circuital node of the first pump stage being connected to the first circuital node of the second boost stage by means of the switching means.

12. The charge pump (100, 400) of any one of the preceding claims, further including:
an output node (N6) for providing the charge pump output voltage, the output node being a first or a second circuital node of a pump stage; and
a first regulating circuit (310) connected to the forcing voltage supplier terminal adapted to set the charge pump output voltage to a desired regulated voltage by regulating the voltage of the forcing voltage supplier terminal.

13. The charge pump (100, 400) of any one among the claims 1-11, further including:
an output node for providing an output boosted voltage, the output node (N6) being a first or a second circuital node of a pump stage; and
a second regulating voltage (350) connected between the forcing voltage supplier terminal and the output node adapted to regulate the charge pump output voltage by selectively interrupting the providing of the voltage of the forcing voltage supplier terminal basing on a comparison between the charge pump output voltage and a reference voltage (Vco).

14. The charge pump (100, 400) of any one of the preceding claims, wherein the first and second forcing circuits includes only electronic devices designed to guarantee the capability of sustaining voltage differences across terminals thereof that are up-limited in absolute value by a predetermined maximum voltage equal to the absolute value of the difference between the first and the second forcing voltages and lower than a charge pump output voltage.

15. The charge pump of any one of the preceding claims, wherein said multiple is equal to one.

16. The charge pump of any one among the claims 1-13, wherein:
said multiple includes a first multiple and a second multiple lower than the first multiple;
the predetermined maximum voltage includes a first predetermined maximum voltage equal to the first multiple of the absolute value of the difference between the first and the second forcing voltages and a second predetermined maximum voltage equal to the second multiple of the absolute value of the difference between the first and the second forcing voltages; and
the at least one electronic device is selected from the group consisting of a first electronic device and a second electronic device, the first electronic device being designed to guarantee the capability of sustaining voltage differences across terminals thereof that are up-limited in absolute value by the first predetermined maximum voltage and lower than a charge pump output voltage and the second electronic device being designed to guarantee the capability of sustaining voltage differences across terminals thereof that are up-limited in absolute value by the second predetermined maximum voltage and lower than a charge pump output voltage.

17. A method of operating a charge pump circuit comprising at least one charge pump stage including:
a capacitor having a first plate and a second plate;
a first circuital node connected to the first plate;
a second circuital node connected to the second plate;
a first forcing circuit associated with the first circuital nodes for forcing the voltage of the first circuital node exploiting at least one electronic device having terminals; and
a second forcing circuit associated with the second circuital nodes for forcing the voltage of the second circuital node exploiting at least one electronic device;
the method including the steps of:
forcing the voltage of the first circuital node to a first forced voltage during a forcing phase of the charge pump operation; and
forcing the voltage of the second circuital node to a second forcing voltage during the forcing phase,
wherein said steps of forcing the voltage include:
ensuring that the voltage difference applied across the terminals of said at least one electronic device is not higher than a predetermined maximum voltage equal to a multiple of the absolute value of the difference between the first and the second forcing voltages and lower than an absolute value of a charge pump output voltage when at least one among the voltages of the first and the second circuital nodes change to a voltage higher in absolute value than said predetermined maximum voltage.
